(19) Europäisches Patentamt / European Patent Office / Office européen des brevets

(11) **EP 2 264 485 A1**

(12) **EUROPEAN PATENT APPLICATION**

(43) Date of publication:
**22.12.2010 Bulletin 2010/51**

(51) Int Cl.:
*G01S 19/47* [(2010.01)]   *G01C 21/16* [(2006.01)]
*G01S 19/49* [(2010.01)]

(21) Application number: **09305511.9**

(22) Date of filing: **04.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Tracedge**
**38100 Grenoble (FR)**

(72) Inventor: **Wägli, Adrian**
**3014 Bern (CH)**

(74) Representative: **Palix, Stéphane et al**
**Cabinet Laurent & Charras**
**"Le Contemporain"**
**50, Chemin de la Bruyère**
**69574 Dardilly Cedex (FR)**

(54) **Method for analysing moving object continuous trajectory based on sampled GPS position**

(57)    The present invention relates to a method for determining a continuous trajectory of a moving object from a position data set, comprising the acquisition of sampled single-frequency differential GPS signal, **characterized in that** it comprises:

■ the correction of the high frequency noise in the data set;
■ the correction of the systematic error in the data set; and
■ the interpolation of the corrected data set with a continuity in position, velocity and acceleration.

Fig. 9

EP 2 264 485 A1

**Description**

**FIELD OF THE INVENTION**

The invention relates to trajectory construction of moving objects based on data from G̲lobal N̲avigation S̲atellite S̲ystem (GNSS), and more particularly trajectory construction in sport like skiing for example.

**STATE OF THE ART**

Spectators of downhill skiing competitions know this confusion: an athlete seems fast, his carving technique seems perfect, but his timing splits are substandard. On the contrary, the descents of other skiers seem turbulent, their styles hazardous, but they are fast. Even professional commentators on TV are sometimes misled in their evaluation based on video sequences, which then amuses the audience. Wrong evaluations may also occur during training sessions and in other sport disciplines. In default of appropriate measurement tools, athletes and coaches largely characterize performances based on their experience and feeling. Their evaluation could be refined with complementary methods offering precise measurements of positions, velocities and orientations.

The lack of objectivity in sport performance assessment is not the only motivation for the development of new analysis systems. Firstly, the differences of skills between competitors tend to diminish in many sports. The demands on material as well as the physical and mental pressure on the athletes are tremendous. Consequently, the evaluation of trainings and competitions has become a key factor of success. Secondly, the athletes' performances are nowadays mainly analyzed by chronometry or video recordings. Material development and testing is based on repeated measurements with timing cells or wind tunnels. Unfortunately, these techniques provide few quantitative variables. Furthermore, they are limited by meteorological conditions and by the difficulty of replicating postures and movements across trials.

Satellite-based positioning and inertial navigation systems are interesting alternatives for trajectory evaluation in sports. Many GPS (Global Positioning System) receivers are proposed for leisure-time sport activities. Such tools allow evaluating performance parameters like distances or velocity and height profiles. More precise satellite positioning systems have been employed for professional performance assessments in winter sports, car racing and rowing. However, the athletes' environments are often partially composed of areas that may block or attenuate satellite signals.

To overcome this difficulty, Inertial Measurement Units (IMUs) are integrated with GPS. These units allow determining orientations, accelerations and velocity and position changes at very high rates. However, even in higher-grade instruments, the effects of uncompensated systematic effects accumulate and the system's accuracy degrades rapidly with time.

By combining satellite and inertial navigation, the drawbacks of each method are successfully cancelled. Indeed, satellite outages are potentially bridged by inertial measurements, while a part of the systematic inertial errors are calibrated when satellite positioning is available. The combination of the high short-term (relative) accuracy of the INS and long-term (absolute) accuracy of GPS results smears the variation in positioning performances and provides data at high rate including good orientation estimates.

For example, conventional GPS/INS (Inertial Navigation System) equipment, consisting of dual-frequency GPS receivers and tactical-grade INS, provides high accuracies (cm for position, cm/s for velocity and 1/100 deg for orientation).

However, in the context of sport applications such equipment is not suitable because it is heavy (a few kg) and expensive (> 40 000 €).

In recent years however, Micro-Electro-Mechanical System (MEMS) IMUs as well as low-cost L1 GPS receivers entered the "navigation world".

MEMS-IMUs present a great potential for sport applications because of their low price and small size. However, their use in positioning is still in its early stages. Given the context of high dynamics in sports and the poor quality of inexpensive MEMS sensors, integration of inertial MEMS with GPS does not give raise yet to sufficient accuracy - especially considering the magnitude and change of their systematic errors and their sensitivity to temperature changes.

Trajectories determined by GPS and GPS/INS are characterized by a succession of discrete sample points (position, velocity and orientation). For convenient representation and efficient analysis, however, it is useful to represent trajectories as continuous curves. To compare trajectories, the positioning accuracy of the trajectories needs to be considered, especially when using equipment having a limited accuracy compared to higher grade instruments.

**SUMMARY OF THE INVENTION**

The invention aims first at defining a method for trajectory construction and analysis of moving objects, in particular in sport.

To this end, the invention relates to a method for determining a continuous trajectory of a moving object from a position data set, comprising the acquisition of sampled single-frequency differential GPS signal, **characterized in**

**that** it comprises:

- the correction of the high frequency noise in the data set;
- the correction of the systematic error in the data set; and
- the interpolation of the corrected data set with a continuity in position, velocity and acceleration.

According particular embodiment of the invention, the method comprises at least one of the following feature:

- the correction of the high frequency noise comprises the acquisition of integration of inertial data set and the integration of the inertial data set with the GPS data set.
- the acquisition of inertial data set is done by a least one MEMs inertial navigation unit.
- the integration of inertial data set with GPS data set comprises a Kalman filtering, and more particularly an extended Kalman filtering or an unscented Kalman filtering.
- the update stage of the Kalman filtering is done according a loosely couple approach or a closely coupled approach.
- wherein the acquisition of inertial data comprises the acquisition the magnetic field.
- the initialization stage of the Kalman filtering is carried out in function of magnetic field measurement.
- the update stage of Kalman filtering is carried out in function of magnetic field measurement.
- the acquisition of inertial data is done by a plurality of MEMs inertial navigation unit, the redundant inertial navigation being processed according to a synthetic mechanization or according to an extended mechanization.
- the correction of the high frequency noise comprises the Kalman filtering of the GPS position data set based on a predetermined model of the position variation.
- the predetermined model is a constant velocity model.
- the correction of the systematic errors comprises the matching of the data set to a reference data set.
- the matching is carried out based on Shapiro's algorithm and Helmert transformation.
- it further comprises the comparison of two continuous trajectories by determining equitemporal planes that are perpendicular to both trajectories.

## BRIEF DESCRIPTION OF THE DRAWINGS

The present invention and its related advantages will be more apparent with the following description, given by way of example, and done in relation with the appended drawings in which:

- figure 1 is a schematic representation of the hardware used for implementing the method according the invention;
- figure 2 is a representation of the magnetic field of the Earth in the northern hemisphere;
- figure 3 illustrates the reference frame and definition;
- figure 4 illustrates the extended Kalman filtering;
- figure 5 is a flow chart of the loosely couple GPS/INS integration;
- figure 6 is a flow chart of the closely coupled GPS/INS integration;
- figure 7 illustrates the principle of mechanization based on a synthetic IMU;
- figure 8 illustrates the principle of mechanization based on an extended IMU mechanization;
- figure 9 is a flow chart of construction and comparison trajectory according the invention;
- figure 10 illustrates the weighting function associated to dual-frequency GPS trajectories;
- figure 11 illustrates a GPS trajectory with changing accuracy and ambiguity status;
- figure 12 illustrates a L1 DGPS trajectory modeled with smoothing splines and Kalman filtering;
- figure 13 illustrates a two sets of L1 DGPS trajectories showing a constant position offset;
- figure 14 illustrates the matching correspondences of a entire trajectory;
- figure 15 illustrates the matching correspondences of a trajectory by segment;
- figure 16 illustrates the matching correspondences of a trajectory by its characteristic points;
- figure 17 illustrates the trajectory matching where a curve is affected by systematic position error;
- figure 18 illustrates the trajectory and velocity evaluation based on distance or time comparison;
- figure 19 illustrates the principle of spatial trajectory comparison, the rectangles representing the plane spanned by a set of real or virtual gates (left), and the velocity comparison derived from spatial trajectory comparison (right); and
- figure 20 illustrates gate intersection.

## DETAILED DESCRIPTION OF THE INVENTION

The algorithms presented below are described in more detail in the document of Adrian Wägli, "*Trajectory determination and analysis in sports by satellite and inertial navigation*", PhD thesis n°4288, Ecole Polytechnique Fédérale de Lausanne, made available to the public on the filing date of the present application.


1. <u>GPS/INS SYSTEM</u>

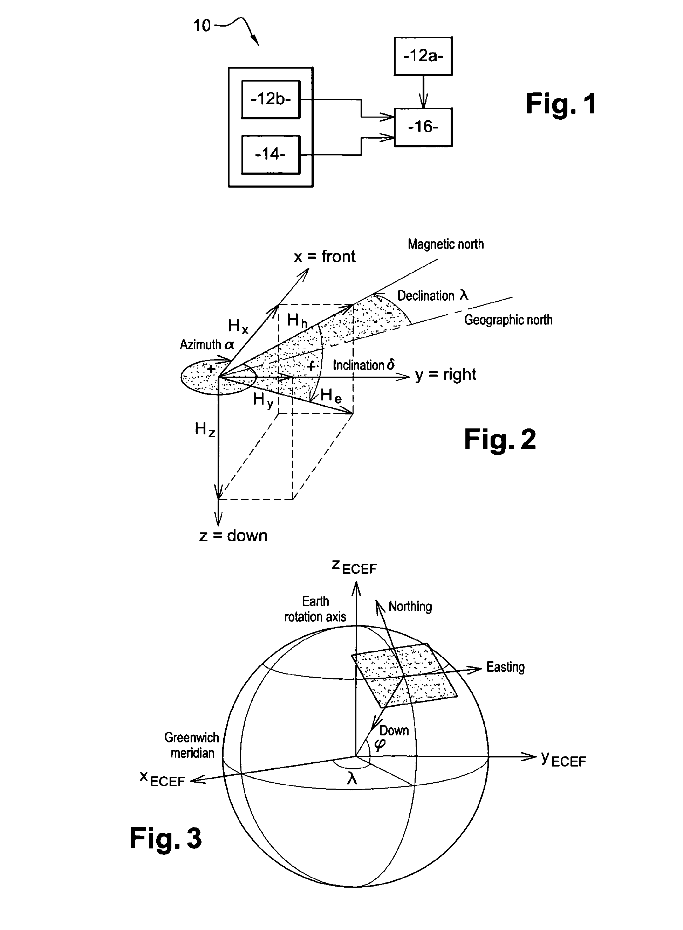

Figure 1 illustrates a GPS/INS system 10 according a first embodiment of the invention.

The system 10 comprises a low-cost single-frequency differential GPS receiver 12, composed of a static single-frequency GPS receiver (called the "master") 12a and a mobile single-frequency GPS receiver (called the "rover") 12b arranged on board the object to be observed (e.g. a car, a motorcycle, an athlete...). The GPS receivers are low-cost GPS receivers that track one frequency generated by GPS satellites, that is to say the L1 frequency as known per se. The raw data of the GPS receivers are available in order to use them in further processing, e.g. by implementing specific model error of GPS measurement. Differential GPS (DGPS) permits reducing the systematic errors in satellite positioning by comparison of the observations between GPS receivers in vicinity, i.e. the static GPS receiver and the mobile GPS receiver. For single-frequency measurements, this hypothesis is valid for distances up to approximately 3-5 km. For example, the single-frequency GPS receivers are GPS receivers "AEK4" manufactured by the firm *U-blox,* Switzerland.

The system 10 also comprises a low-cost inertial measurement unit (IMU) 14 in MEMs technology, rigidly fixed to the mobile GPS reveiver and time synchronized with the receivers. The MEMs-IMU 14 is composed of three orthogonal gyroscopes, three orthogonal accelerometers and three orthogonal magnetometers. The gyroscopes sense angular velocity $\omega_{ib}^{b}$ between the body frame of the IMU and the inertial frame. The accelerometers measure specific force $f^b$ (i.e. force per unit mass) along the axes of the body frame. The magnetometers measure the amplitude of the magnetic field along their axis. For example, the MEMs-IMU 14 is a "3DM-G" IMU manufactured by the firm *Microstrain,* Vermont, USA or a "MTi" IMU manufactured by the firm *Xsens,* Netherland.

Finally, the system 10 comprises a data processing unit 16, connected to the DGPS receiver 12 and the MEMs-IMU 14 and/or to a mass memory storing measurement data from the receiver 12 and the IMU 14. The unit 16, comprising for example a DSP, is composed of classical hardware components but implements an integration algorithm according to the invention allowing an accurate positioning of the moving objet based on poor accuracy measurement from low-cost sensors.

The unit 16 implements an extended Kalman filtering (EFK) or an unscended Kalman filtering (UKK), these algorithms being appropriate for integration of measurements from rapid moving object, especially in sport application, because of their rapid convergence and reasonable computational complexity.

Preferably, the Kalman filtering is combined with a simplified inertial error model suitable for MEMs-IMU. As the numerous MEMs-IMU error sources cannot be decorrelated effectively, the simplified approach allows appropriate modeling of the quickly evolving inertial sensor errors. The simplified model according the invention is independent of the algorithm used for GPS/INS integration.

Furthermore, specific models for state propagation and measurements have been designed for GPS/MEMs-IMU.

Moreover, as the conventional alignment methods used in GPS/INS integration are not applicable because of the sensor characteristics of the MEMs-IMU sensors, the Kalman filtering is advantageously initialized using a coarse alignment algorithm where the sensing of the Earth's rotation rate, used in conventional alignment methods, is replaced by the measurement of magnetic field. Alternatively, a quaternion estimation method is used to initialize Kalman filtering, also based on accelerometer and magnetometer measurements, this method being preferred because of absence of numerical singularities. The coarse alignment, as well as the quaternion estimation method, is used both with EKF and UKF.

Furthermore, the update stage of Kalman filtering is carried out according a loosely coupled approach, wherein GPS coordinates and velocities are fed up to the filtering as external aiding to inertial measurements. Optionally, magnetometer measurements are introduced at the update stage to bridge the gap in GPS positioning.

Alternatively, the update stage of Kalman filtering is carried out according a closely coupled approach, wherein double-differenced carrier-phase smoothed GPS pseudorange and Doppler measurements are integrated with inertial measurements. Optionally, magnetometer measurements are introduced as external aiding. The loosely and the closely coupled methods define the way the GPS measurements are used to update inertial measurements and are thus independent from the type of Kalman filtering used for integration.

Under reasonable satellite constellation (> 4 visible satellites), the loosely coupled approach provides increased performance over the closely coupled approach. However, under less favorable satellite constellation, for example 3 visible satellites, the closely couple approach outperforms the loosely couple approach and allows maintaining a submetric position accuracy during up to 30 seconds of reduced satellite signal reception.

Although the above features (type of Kalman filtering, simplified model error, type of initialization and type of update) are independent, their combination gives rise to a highly accurate and low-cost GPS/INS system

It is now described in details the integration algorithms implemented by unit 16.

1.1. INERTIAL MEASUREMENT MODEL

Inertial measurements are always affected by random and systematic errors with varying magnitude according to the sensor's quality. The following generalized error model is usually formulated by:

$$\hat{\ell} = \mathbf{M}_\ell \cdot (\mathbf{S}_\ell \cdot \ell + \mathbf{b}_\ell) + \mathbf{w}_\ell \qquad (1)$$

where $\hat{\ell}$ represents the estimated measurement, $\ell$ the nominal observation and $\mathbf{M}_\ell$ the misalignment matrix. The diagonal matrix $\mathbf{S}_\ell$ contains the scale factors, $\mathbf{b}_\ell$ is the bias and $\mathbf{W}_\ell$ the measurement white noise vector.

According to the invention, judging that the misalignments, scale factors and constant error terms cannot be decorrelated efficiently given the complexity of the MEMS sensors, the generalized error model is simplified. Indeed, only a bias term is considered and its associated errors are modelled as first order Gauss Markov processes. The simplified model of the invention is thus given by:

$$
\begin{aligned}
\hat{\ell} &= \ell + \mathbf{b}_\ell + \mathbf{w}_\ell \\
\dot{\mathbf{b}}_\ell &= -\beta_\ell \cdot \mathbf{b}_\ell + \sqrt{2\sigma_\ell^2 \beta_\ell}\, \mathbf{w}_\ell
\end{aligned}
\qquad (2)
$$

Where $\beta_\ell = 1/T$ is the inverse of the correlation time T and $\sigma_\ell$ is the standard deviation of the white noise processes.

1.2. MAGNETIC MEASUREMENT MODEL

Figure 2 describes the components of Earth magnetic field $H_e$ and the magnetic measurements $H_x$, Hy and $H_z$ along body frame axis x, y and z.

The azimuth $\alpha$ is the angle between magnetic north and the x-axes of a triple-axis magnetic sensor in the local-level frame (NED) and is thus given by:

$$\alpha = \arctan\left(\frac{-H_y}{H_x}\right) \qquad (3)$$

Magnetic north is the direction of the horizontal component $H_h$ of the magnetic field of the Earth $H_e$ which is the component perpendicular to the gravity vector. The azimuth needs to be corrected for the magnetic declination $\lambda$ to derive the orientation with respect to the geographic north which is defined by the Earth's axis of rotation. The magnetic declination is varying as a function of the position on the globe and time. It can be retrieved from global or local models, e.g. the World Magnetic Model (WMM) produced by the United States National Geospatial-Intelligence Agency (NGA) (http://www.ngdc.noaa.gov/geomag/WMM/DoDWMM.shtml). The magnetic inclination $\delta$ is the angle of the magnetic vector to the horizontal Plane. The following relation is thus satisfied:

$$\mathbf{H}_e = H_h \begin{bmatrix} \cos(\alpha) \\ -\sin(\alpha) \\ \tan(\delta) \end{bmatrix} = \begin{bmatrix} H_x \\ H_y \\ H_z \end{bmatrix} \tag{4}$$

However, the Earth magnetic field measurement is disturbed by parasite magnetic fields. The perturbations can be natural or caused by man-worn objects. Soft perturbations may be caused by ferrous materials that influence the direction of the Earth magnetic field. Hard magnetic disturbances (i.e. sign flipping or complete overmasking) may be caused by magnetic objects like electrical lines or electronic equipment. These perturbations may vary much faster in time, e.g. during the communication setup of a telecommunication link. Generally, rotation and translation parameters are estimated to model the weak magnetic disturbances.

According to the invention, a simplified model is considered estimating only a bias term according to:

$$\hat{\mathbf{h}} = \mathbf{h} + \mathbf{d}_m + \mathbf{w}_m \tag{5}$$

where $\hat{\mathbf{h}}$ is the estimated magnetic field measurement, $\mathbf{h}$ the measured magnetic field, $\mathbf{d}_m$ the magnetic disturbance and $\mathbf{W}_m$ the measurement noise. The magnetic disturbance is modelled as a first order Gauss-Markov process:

$$\dot{\mathbf{d}}_m = -\beta_{d_m} \mathbf{d}_m + \sqrt{2\sigma_{d_m}^2 \beta_{d_m}}\ \mathbf{w}_{d_m} \tag{6}$$

where $\beta d_m$ is a parameter of the disturbance model and $\sigma d_m$ is the standard deviation of the white noise processes.

1.3. GPS MEASUREMENT MODEL

GPS receivers 12a, 12b store a copy of the Pseudo Random Noise (PRN) emitted by the GPS satellites. By comparing the signal from a satellite from its copy, the receiver determines a time shift and deduces the pseudorange between the satellite and the receiver. The code measurement model, or pseudorange measurement model, is given

by (7): $p^s_{Li,r} - v^s_r = \rho^s_r + d\rho^s_r + c \cdot (dt_r - dt^s(t - \tau)) + T^s_r + I^s_{Li,r} + M^s_{pi,r} + c \cdot (b^s_{Li} + b_{Li,r})$

where $p^s_{Li,r}$ is the observed pseudorange on Li = L 1 frequency at time t, $\rho^s_r$ is the true distance between the receiver r and the satellite s, $d\rho^s_r$ is the radial orbital error at transmit time, $dt_r$ is the receiver clock error, $dt^s(t - \tau)$ is

the satellite clock error considering the propagation time $T$ of the GPS signal ($\tau = \rho/c$), $T^s_r$ is the tropospheric delay,

$I^s_{Li,r}$ are the ionospheric delays on Li, $M^s_{pi,r}$ is the multipath error,

$b^s_{Li}$ and $bL_{i,r}$ are hardware delays, $v^s_r$ is the residual error, and c is the speed of light.

GPS receiver measures carrier-phase of L1 frequency signals, which satisfies the following relation:

$$Li_r^s - v_r^s = \lambda_{Li} \cdot \phi_{Li,r}^s - v_r^s = \rho_r^s + d\rho_r^s + c \cdot (dt_r - dt^s(t-\tau)) + T_r^s - I_{Li,r}^s + M_{Li,r}^s + \lambda_{Li} \cdot B_{Li,r}^s$$

$$(8)$$

with $\lambda_{Li} \cdot B_{Li.r}^s = \lambda_{Li} \cdot (N_{Li.r}^s + \delta N_{Li.r}^s) + c \cdot (b_{Li}^s + b_{Li,r})$, where $\rho_r^S$ is the true distance between satellite and receiver, $N_{Li,r}^s$ is an unknown number of cycles (carrier-phase ambiguity), $\phi_{Li,r}^S$ is the

phase measurement and λ*Li* the wavelength.

Advantageously, as both code measurement and phase-carrier measurement are carried out by the system of the invention, a carrier-phase smoothing is also implemented, the carrier-phase measurement being smoothed by the code measurement according:

$$\tilde{p}_{L1,r}^s(t) = \frac{1}{n}p_{L1,r}^s + \frac{n-1}{n} \cdot (\bar{p}_{L1,r}^s(t-1) + (L1_r^s(t) - L1_r^s(t-1)))$$

$$(9)$$

where $\tilde{p}_{Li,r}^S$ are the carrier-phase smoothed code measurements, $\bar{p}_{Li,r}^S$ are the average pseudorange over n epochs without cycle slip. The measurement noise is thus reduced by √*n*.

Advantageously, GPS receivers also carry out Doppler measurements. The frequency of the received signal differs from the frequency transmitted by the satellites. This frequency offset is partly due to Doppler effect which is caused by the relative motion of the transmitting satellite with respect to the receiver. The Doppler shift is converted to a pseudorange rate observation by the following expression:

$$\dot{p}_{Li,r}^s - v_r^s = \dot{\rho}_r^s + c \cdot \dot{dt}_r \qquad (10)$$

where $\dot{p}_{Li,r}^S$ the pseudorange rate observation on Li=L1 frequency, $\dot{\rho}_r^S$ is the true pseudorange rate, $\dot{dt}_r$ is the

receiver clock drift to the delta range measurement, and $v_r^S$ is the residual error.

The above measurement models are valid for each GPS receiver 12a, 12b. However, differential GPS, which combines the measurments of the moving receiver and the measurement of the fixed receiver, permits reducing the systematic error in satellite positioning. Accordingly unit 16 combined measurements of the two receivers to get double-differenced measurement according to:

$$\nabla\Delta p_{Li,mr}^{zs} - v_{mr}^{zs} = \nabla\Delta\rho_{mr}^{zs} + \nabla\Delta M_{pi,mr}^{zs}$$
$$\nabla\Delta Li_{mr}^{zs} - v_{mr}^{zs} = \nabla\Delta\rho_{mr}^{zs} + \nabla\Delta M_{Li,r}^{zs} + \lambda_{Li} \cdot \nabla\Delta B_{mr}^{zs}$$
$$\nabla\Delta \dot{p}_{Li,mr}^{zs} - v_{mr}^{zs} = \nabla\Delta\dot{\rho}_{mr}^{zs}$$

$$(10)$$

where:

- ■ m indicates the master receiver (fixed receiver), r indicates de rover receiver (mobile receiver), z indicates a satellite chosen as reference satellite, s indicates a satellite different from the reference satellite;

- ■ the single difference operator $\Delta$ of quantity x is defined as $\Delta x^s_{mr} = x^s_m - x^s_r$

- ■ the double difference operator $\nabla\Delta$ of a quantity x is defined as :

$$\nabla\Delta x^{zs}_{mr} = \Delta x^z_{mr} \quad - \Delta x^s_{mr}$$
$$= \left(x^z_m - x^z_r\right) - \left(x^s_m - x^s_r\right)$$

Hence double differencing eliminates the atmospheric error, the satellite clock error, the orbital error the receiver clock drift and the hardware error.

The system of the invention uses double-differences, phase-smoothed GPS code and Doppler measurements for the integration of GPS and INS measurements.

1.4. EXTENDED KALMAN FILTERING

1.4.1. STATE VECTOR DEFINITION

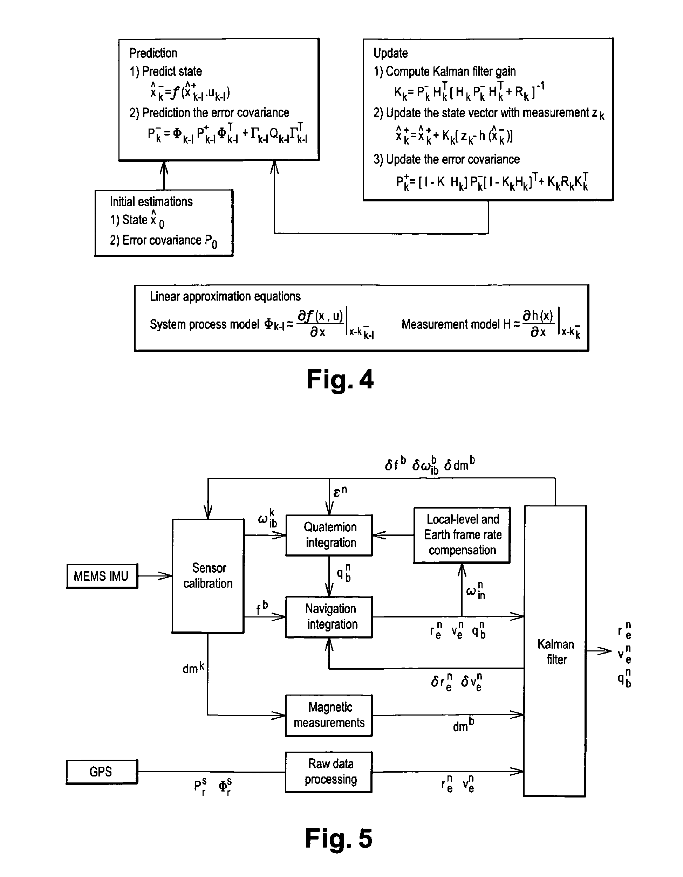

Figure 4 illustrates the extended Kalman filtering with the general formulation of its equations. The EKF is an adaptation of the KF to non-linear functions that are approximated by linearization. As known per se, the state is propagated based on motion model constituted of equations **f** Meanwhile, the covariance matrix is predicted based on the transition matrix $\Phi$ which is obtained from the linearization of **f**.

According to the invention, the state vector contains the correction terms of the GPS navigation parameters as the significant part of the systematic errors of the inertial and magnetic measurements. The state vector, which converges as the Kalman filtering converges, is thus used to calibrate the measurement models described above.

Advantageously, the local-level frame (NED frame for "Northing", "Easting" and "Down") has been chosen as navigation frame (index n) (see figure 3). The advantage of the local-level frame is that its axis are aligned to the local east, north and down directions. As the definition of the local-level frame is based on the vertical to the reference ellipsoid, geodetic coordinate differences result from the integration which makes the state interpretation straightforward.

More particularly, the state vector $\delta\mathbf{x}$ is defined by:

$$
\delta\mathbf{x} =
\begin{bmatrix}
\delta\varphi \\
\delta\lambda \\
\delta h \\
\delta v_N \\
\delta v_E \\
\delta v_D \\
\delta\epsilon_N \\
\delta\epsilon_E \\
\delta\epsilon_D \\
\delta b_{f_x} \\
\delta b_{f_y} \\
\delta b_{f_z} \\
\delta b_{\omega_x} \\
\delta b_{\omega_y} \\
\delta b_{\omega_z} \\
\delta d_{m_x} \\
\delta d_{m_y} \\
\delta d_{m_z}
\end{bmatrix}
\tag{11}
$$

where:

- $\mathbf{r}^n = \begin{bmatrix} \varphi \\ \lambda \\ h \end{bmatrix}$ is the position vector, φ being the latitude, λ being the longitude, and h being the altitude (or height);

$$
\mathbf{v}^n =
\begin{bmatrix}
v_N \\
v_E \\
v_D
\end{bmatrix}
=
\begin{bmatrix}
(R+h)\dot{\varphi} \\
(R+h)\cos\varphi\,\dot{\lambda} \\
-\dot{h}
\end{bmatrix}
$$

is the velocity vector, R being the Earth radius;

- $e^n = \begin{bmatrix} \varepsilon_N \\ \varepsilon_E \\ \varepsilon_D \end{bmatrix}$ is the orientation vector of the inertial vector with respect to the navigation frame;

- the position errors $\delta \mathbf{r}^n$ are defined by :

$$\delta \dot{\mathbf{r}}^n = \mathbf{D}^{-1} \cdot \delta \mathbf{v}^n - \mathbf{D}^{-1} \cdot \mathbf{D}_r \cdot \delta \mathbf{r}^n$$

$$\mathbf{D}_r = \begin{bmatrix} 0 & 0 & \dot{\varphi} \\ -\dot{\lambda}(R+h)\sin\varphi & 0 & \dot{\lambda}\cos\varphi \\ 0 & 0 & 0 \end{bmatrix} \tag{12}$$

$$\mathbf{D}^{-1} = \begin{bmatrix} \frac{1}{R+h} & 0 & 0 \\ 0 & \frac{1}{(R+h)\cos\varphi} & 0 \\ 0 & 0 & -1 \end{bmatrix}$$

- the velocity errors $\delta \mathbf{v}^n$ are defined by:

$$\delta \dot{\mathbf{v}}^n = -\mathbf{f}^n \times \boldsymbol{\epsilon}^n + \mathbf{R}_b^n \delta \mathbf{f}^b - (\omega_{in}^n + \omega_{ie}^n) \times \delta \mathbf{v}^n - (\delta\omega_{in}^n + \delta\omega_{ie}^n) \times \mathbf{v}^n + \delta \mathbf{g}^n \tag{13}$$

where $\mathbf{f}^n$ is the specific force measurement express in the navigation frame,

$$\omega_{ie}^n = \begin{bmatrix} \Omega_E \cos\varphi \\ 0 \\ -\Omega_E \sin\varphi \end{bmatrix}, \quad \omega_{en}^n = \begin{bmatrix} \dot{\lambda}\cos\varphi \\ -\dot{\varphi} \\ -\dot{\lambda}\sin\varphi \end{bmatrix}$$

and

$\omega_{in}^n = \omega_{ie}^n + \omega_{en}^n$ are the Coriolis terms, $\mathbf{R}_n^b$ is the rotation matrix transforming coordinates from the body frame b to the navigation frame n, and $\delta \mathbf{g}^n$ is the error in the gravity term.

- the orientation errors $\delta \epsilon^n$ is defined by:

$$\dot{\boldsymbol{\epsilon}}^n = \mathbf{R}_b^n \delta\omega_{ib}^b - \delta\omega_{in}^n - \omega_{in}^n \times \boldsymbol{\epsilon}^n \tag{14}$$

- the accelerometer biases $\delta \mathbf{b}_f^b$ and gyroscope biases $\delta b_\omega$ are defined by equation (2); and

■ the magnetic disturbance δd*m* are defined by equation (6), the magnetic disturbance terms being normalized to limit numerical instabilities.

Employing double-differenced, phase-smoothed GPS code and Doppler measurements, the state vector is the same in the loosely and in the closely coupled approach.

Therefore, neither time differences between the master and rover receiver Δδ*tmr*, nor ambiguity terms *N* for each visible satellite need to be estimated.

Acceleration terms are not included in the state vector. Indeed, accelerations derived from GPS measurements are fully correlated to the velocities, which leads to a lack of observability.

1.4.2. INITIALIZATION STEP

Usually, in higher grade equipments, position and velocity states are initialized by GPS measurements. Alternatively, if the objet, e.g. an athlete, is not moving, the initial coordinates can be introduced manually. The coarse alignment method applied in conventional GPS/INS integration considers two pairs of vectors which are both available in the local-level frame (n), which is also the navigation frame, and the body-frame (b). The local-level projection of these two vectors is known from the model of the Earth (gravity and Earth rotation) while the body frame projections are obtained from the sensor measurements (specific force and angular rate). Unfortunately, the error characteristics of the MEMS gyroscopes (noise level > 0.1 deg/s/(Hz)$^{1/2}$, systematic errors of several deg/s) do not allow sensing the Earth's rotation rate. Hence, the conventional alignment methods cannot be employed.

Therefore, according to the invention unit 16 two alternative approaches exploiting MEMS magnetometers are envisaged: the modified coarse alignment and a quaternion based algorithm (QUEST algorithm).

The modified coarse alignment is now described in a static condition of the object to be observed.

The MEMS magnetic measurements and the a priori known magnetic field of the Earth offer a pair of vectors that replace the gyroscope measurements. The orientation of a rigid body $\mathbf{R}_n^b$ is thus determined from the following relation:

$$\left[ \begin{array}{ccc} -\mathbf{f}^b & \mathbf{m}^b & -\mathbf{f}^b \times \mathbf{m}^b \end{array} \right] = \mathbf{R}_n^b \left[ \begin{array}{ccc} \bar{\mathbf{g}}^n & \mathbf{m}^n & \bar{\mathbf{g}}^n \times \mathbf{m}^n \end{array} \right]$$

(15)

where $\mathbf{f}^b$ is the specific force measurement, $\bar{\mathbf{g}}^n$ is the normal gravity vector, $\mathbf{m}^b$ is the magnetic observation and $\mathbf{m}^n$ is the Earth magnetic field deduced from any global or local reference model (e.g. the World Magnetic Model). Advantageously, $\mathbf{f}^b$ and $\mathbf{m}^b$ are averaged over a period during which the sensor does not move.

The quaternion estimation algorithm is now described object to be observed.

Quaternions are a four-parameter attitude representation method based on Euler's theorem which states that a transformation from one coordinate frame to another can be performed by a single rotation of a given magnitude about a vector. The four elements of the quaternion q are functions of the vector u and the magnitude of rotation u:

$$\mathbf{q} = \left[ \begin{array}{c} \cos\left(\frac{u}{2}\right) \\ \frac{u_x}{2} \sin\left(\frac{u}{2}\right) \\ \frac{u_y}{2} \sin\left(\frac{u}{2}\right) \\ \frac{u_z}{2} \sin\left(\frac{u}{2}\right) \end{array} \right]$$

(16)

where $u_x$, $u_y$ and $u_z$ are the components of the vector u with magnitude

$$u = \sqrt{u_x^2 + u_y^2 + u_z^2}.$$

The orientation can be found unambiguously when minimizing expression:

$$J(\mathbf{q}_n^b) = \frac{1}{2} \sum_{i=1}^{2} w_k (\mathbf{b}_i - \mathbf{R}_n^b \mathbf{n}_i)^2 \tag{17}$$

with the condition $\left(\mathbf{q}_n^b\right)^T \cdot \mathbf{q}_n^b = 1$, where where J is a cost function, $\mathbf{q}_n^b$ is the orientation expressed as quaternion, $b_i$ is a measurement in the body frame (magnetic observation $\mathbf{m}^b$ or specific force $\mathbf{f}^b$), and $\mathbf{n}_i$ is the corresponding reference value (magnetic field $\mathbf{m}^n$ and normal gravity $\overline{\mathbf{g}}^n$). This algorithm, known as the QUEST algorithm, is described in more detail e.g. in M.D. Schuster and S.D. Oh. "Three-Axis Attitude Determination from Vector Observations". Journal of Guidance and Control, 4(1):70_77, 1981.

Alternatively, the initialization is performed under dynamic conditions. In such condition, the specific force measurements are corrected for the kinematic acceleration. This acceleration is derived from GPS measurements in the navigation frame and fed back to the coarse alignment or to the QUEST algorithm:

$$\mathbf{f}^n = \mathbf{a}^n + \left(\omega_{in}^n + \omega_{ie}^n\right) \times \mathbf{v}^n - \mathbf{g}^n \tag{18}$$

where $a^n$ and $v^n$ are the acceleration and velocity vectors derived from GPS respectively. Furthermore, the gyroscope measurement can be accounted for between epochs by means of the elegant recursive QUEST (REQUEST) algorithm, as described e.g. in I.Y. Bar-Itzhack, "REQUEST - A New Recursive Algorithm for Attitude Determination", in Proceedings of the ION NTM, Santa Monica, CA, USA, 1996

1.4.3. PREDICTION STEP

Inertial navigation is unique among navigation technologies because of its autonomous character. As inertial sensors operate without reference to external signals, they are not affected by atmospheric conditions, line-of sight obstruction or other obstacles inherent to other navigation systems based on position fixing. The equation system relating position, velocity and orientation to INS measurements is given by:

$$\begin{bmatrix} \dot{\mathbf{r}}^n \\ \dot{\mathbf{v}}^n \\ \dot{\mathbf{R}}_b^n \end{bmatrix} = \begin{bmatrix} \mathbf{D}^{-1}\mathbf{v}^n \\ \mathbf{R}_b^n\mathbf{f}^b - \left(\omega_{in}^n + \omega_{ie}^n\right) \times \mathbf{v}^n + \mathbf{g}^n \\ \mathbf{R}_b^n\left(\omega_{ib}^b - \omega_{in}^b\right) \end{bmatrix}$$

The orientation of the inertial sensor with respect to the navigation frame at time k (k is the $k^{th}$ measurement

epoch) $\left(\mathbf{q}_b^b\right)_{k|k}$ is propagated to time k + 1 by applying:

$$\left(\mathbf{q}_b^n\right)_{k+1|k+1} = \left(\mathbf{q}_n^n\right)_{k+1|k} \cdot \left(\mathbf{q}_b^n\right)_{k|k} \cdot \left(\mathbf{q}_b^b\right)_{k|k+1} \qquad (19)$$

b The quaternion $\mathbf{q}_b^b$ expresses the rotation of the body frame (index b) between two successive epochs which is derived from the gyroscopes. It is defined as a function of the rotation vector $\mathbf{u}_b^b$:

$$\left(\mathbf{q}_b^b\right)_{k|k+1} = \begin{bmatrix} \cos(\frac{\|\mathbf{u}_b^b\|}{2}) \\ \frac{\mathbf{u}_b^b}{\|\mathbf{u}_b^b\|} \sin(\frac{\|\mathbf{u}_b^b\|}{2}) \end{bmatrix} \qquad (20)$$

Where $\dot{\mathbf{u}}_b^b \approx \boldsymbol{\omega}_{ib}^b$ are the rotation rates measured by the gyroscopes:

$$\mathbf{u}_b^b = \int_{t_k}^{t_{k+1}} \dot{\mathbf{u}}_b^b \, dt \approx \left(\boldsymbol{\omega}_{ib}^b\right)_k \cdot \left(t_{k+1} - t_k\right) \qquad (21)$$

The rotation quaternion $\left(\mathbf{q}_n^n\right)_{k+1|k}$ describes the relative motion of the navigation frame (index n) at instant $t_k$ with respect to instant $t_{k+1}$. It is opposite in phase to the rotation vector $\mathbf{u}_n^n$:

$$\left(\mathbf{q}_n^n\right)_{k+1|k} = \begin{bmatrix} \cos(\frac{\|\mathbf{u}_n^n\|}{2}) \\ -\frac{\mathbf{u}_n^n}{\|\mathbf{u}_n^n\|} \sin(\frac{\|\mathbf{u}_n^n\|}{2}) \end{bmatrix} . \qquad (22)$$

where

$$\mathbf{u}_n^n \approx \boldsymbol{\omega}_{in}^n \cdot \Delta t \quad , \Delta t = t_{k+1} - t_k$$

This algorithm thus propagates $\mathbf{q}_b^n$, $\mathbf{q}_b^b$ and $\mathbf{q}_n^n$ at equal rates.

Once the orientation of the sensors at time $t_{k+1}$ is known, the velocity can be integrated from the specific force measurements $\mathbf{f}^b$ :

$$(\mathbf{v}^n)_{k+1} = (\mathbf{v}^n)_k + (\Delta \mathbf{v}_{g/cor}^n)_{k+1} + (\Delta \mathbf{v}_f^n)_{k+1} \qquad (23)$$

where:

$$(\Delta \mathbf{v}_{g/cor}^n)_{k+1} = \int_{t_k}^{t_{k+1}} \mathbf{g}^n - (2 \cdot \omega_{ie}^n + \omega_{en}^n) \times \mathbf{v}^n \, dt$$

$$\approx [(\mathbf{g}^n)_k - (2 \cdot (\omega_{ie}^n)_k + (\omega_{en}^n)_k) \times (\mathbf{v}^n)_k] \cdot (t_{k+1} - t_k)$$

$$(24)$$

and

$$(\Delta \mathbf{v}_f^n)_{k+1} = \int_{t_k}^{t_{k+1}} \mathbf{R}_b^n \mathbf{f}^b dt$$

$$\approx (\mathbf{R}_b^n)_{k+1|k} \cdot \mathbf{f}^b dt = (\mathbf{R}_b^n)_{k+1|k} \cdot \mathbf{f}^b \cdot \Delta t$$

$$(25)$$

$\mathbf{v}^n$ represents the velocity with respect to the navigation frame n, $\omega_{ie}^n$ is the rotation rate of the Earth expressed in the navigation frame, $\bar{\omega}_{en}^n$ is the rotation rate of the local geographic frame with respect to the Earth fixed frame (ECEF, figure 3), $(\mathbf{R}_b^n)_{k+1/k}$ is the matrix expression of $(\dot{\mathbf{q}}_b^n)_{k+1/k}$ which is derived from equation (19):

$$(\mathbf{q}_b^n)_{k+1|k} = (\mathbf{q}_n^n)_{k+1|k} \cdot (\mathbf{q}_b^n)_{k|k} \qquad (26)$$

The accelerations $\mathbf{a}^n$ are extracted from equations (24) and (25):

$$(\mathbf{a}^n)_{k+1} = (\mathbf{R}_b^n)_{k+1|k}(f^b)_k + \mathbf{g}^n \qquad (27)$$

The position term $\mathbf{r}^n$ is predicted as follow:

$$(\mathbf{r}^n)_{k+1} = (\mathbf{r}^n)_k + \frac{1}{2} \cdot \mathbf{D}^{-1}((\mathbf{v}^n)_{k+1} + (\mathbf{v}^n)_k) \cdot (t_{k+1} - t_k)$$

$$(29)$$

5 Optionally, higher-order extrapolations could be applied to $\mathbf{r}^n$ and $\mathbf{v}^n$ for very high dynamics, e.g. by extrapolating the previous states by $\frac{1}{2}\Delta t$ :

$$x_{k+\frac{1}{2}} = \frac{3}{2}x_k - \frac{1}{2}x_{k-1} \qquad (29)$$

This extrapolation is applied to $\mathbf{r}^n$ and $\mathbf{v}^n$ before the state propagation. This 10 guarantees that all derived variables (e.g. $\omega^n_{in}$) are predicted automatically according to the same extrapolation scheme.

The states representing the inertial sensor errors (gyroscope, accelerometer and magnetometer biases) are modelled as first order Gauss-Markov processes. Hence, their 15 propagation is done according:

$$
\begin{aligned}
(\mathbf{b}_{\omega^b_{ib}})_{k+1} &= (1 - \beta_{b_\omega}(t_{k+1} - t_k))(\mathbf{b}_\omega)_k \\
(\mathbf{b}_{f_b})_{k+1} &= (1 - \beta_{b_{f_b}}(t_{k+1} - t_k))(\mathbf{b}_{f_b})_k \quad (30) \\
(\mathbf{d}_m)_{k+1} &= (1 - \beta_{d_m}(t_{k+1} - t_k))(\mathbf{d}_m)_k
\end{aligned}
$$

where $\beta_{b\omega}$, $\beta_{bfb}$ and $\beta_{dm}$ are parameters of Gauss-Markov processes.

20 As known per se, the state covariance matrix propagates using a propagation equation of the type:

$$\tilde{\mathbf{P}}_k = \mathbf{\Phi}_{k-1}\hat{\mathbf{P}}_{k-1}\mathbf{\Phi}^T_{k-1} + \mathbf{\Gamma}_{k-1}\mathbf{Q}_{k-1}\mathbf{\Gamma}^T_{k-1} \qquad (31)$$

According to the invention, transition matrix $\Phi$ is computed based on the system matrix $\mathbf{F}$, the k index being omitted for clarity :

$$
\begin{aligned}
\mathbf{\Phi} &= e^{\mathbf{F}\Delta t} \\
&\approx \mathbf{I} + \mathbf{F}\Delta t + \frac{(\mathbf{F}\Delta t)^2}{2!} + \frac{(\mathbf{F}\Delta t)^3}{3!}
\end{aligned} \qquad (32)
$$

where $\Delta t = t_{k+1} - t_k$ and :

$$
\mathbf{F} = \left[
\begin{array}{c|ccc}
 & \mathbf{0}_{3\times3} & \mathbf{0}_{3\times3} & \\
\mathbf{F}_{main} & \mathbf{R}_b^n & \mathbf{0}_{3\times3} & \mathbf{0}_{9\times3} \\
 & \mathbf{0}_{3\times3} & \mathbf{R}_b^n & \\
\hline
\mathbf{0}_{3\times9} & -\beta_f \cdot \mathbf{I}_{3\times3} & \mathbf{0}_{3\times3} & \mathbf{0}_{3\times3} \\
\mathbf{0}_{3\times9} & \mathbf{0}_{3\times3} & -\beta_\omega \cdot \mathbf{I}_{3\times3} & \mathbf{0}_{3\times3} \\
\mathbf{0}_{3\times9} & \mathbf{0}_{3\times3} & \mathbf{0}_{3\times3} & -\beta_{d_m} \cdot \mathbf{I}_{3\times3}
\end{array}
\right] \tag{33}
$$

$$
\mathbf{F}_{main} = \left[
\begin{array}{ccc}
\mathbf{F}_{11} & \mathbf{F}_{12} & \mathbf{F}_{13} \\
\mathbf{F}_{21} & \mathbf{F}_{22} & \mathbf{F}_{23} \\
\mathbf{F}_{31} & \mathbf{F}_{32} & \mathbf{F}_{33}
\end{array}
\right]
$$

with :

$$
\mathbf{F}_{11} = -\mathbf{D}^{-1}\mathbf{D}_r = \left[
\begin{array}{ccc}
0 & 0 & -\frac{\dot{\varphi}}{R+h} \\
\dot{\lambda}\tan(\varphi) & 0 & -\frac{\dot{\lambda}}{R+h} \\
0 & 0 & 0
\end{array}
\right]
$$

$$
\mathbf{F}_{12} = \mathbf{D}^{-1}
$$

$$
\mathbf{F}_{13} = \mathbf{0}_{3\times3}
$$

$$
\mathbf{F}_{21} = \left[
\begin{array}{ccc}
-v_E\left(2\Omega_E\cos\varphi + \frac{\dot{\lambda}}{\cos\varphi}\right) & 0 & \frac{\dot{\lambda}\sin\varphi}{(R+h)}v_E - \frac{\dot{\varphi}}{(R+h)}v_D \\
2\Omega_E(v_N\cos\varphi - v_D\sin\varphi) + \frac{\dot{\lambda}}{\cos\varphi}v_N & 0 & -\frac{\dot{\lambda}}{(R+h)}(v_N\sin\varphi + v_D\cos\varphi) \\
2\Omega_E v_E\sin\varphi + \frac{\partial g_0(\varphi,h)}{\partial\varphi} & 0 & \frac{\dot{\lambda}\cos\varphi}{(R+h)}v_E + \frac{\dot{\varphi}}{(R+h)}v_N - \frac{2g}{R} + \frac{6}{R^2}h
\end{array}
\right] \tag{2.15}
$$

$$
\mathbf{F}_{22} = \left[
\begin{array}{ccc}
\frac{v_D}{R+h} & -2(\Omega_E + \dot{\lambda})\sin\varphi & \dot{\varphi} \\
(2\Omega_E + \dot{\lambda})\sin\varphi & \frac{v_D + v_N\tan\varphi}{R+h} & (2\Omega_E + \dot{\lambda})\cos\varphi \\
-2\dot{\varphi} & -2(\Omega_E + \dot{\lambda})\cos\varphi & 0
\end{array}
\right]
$$

$$\mathbf{F}_{23} = -[\mathbf{f}^n \times] = -\left[\mathbf{R}_b^n \mathbf{f}^b \times\right] = \begin{bmatrix} 0 & f_D & -f_E \\ -f_D & 0 & f_N \\ f_E & -f_N & 0 \end{bmatrix}$$

$$\mathbf{F}_{31} = \begin{bmatrix} \Omega_E \sin\varphi & 0 & \frac{\dot\lambda \cos\varphi}{(R+h)} \\ 0 & 0 & -\frac{\dot\varphi}{(R+h)} \\ \Omega_E \cos\varphi + \frac{\dot\lambda}{\cos\varphi} & 0 & -\frac{\dot\lambda \sin\varphi}{(R+h)} \end{bmatrix}$$

$$\mathbf{F}_{32} = \begin{bmatrix} 0 & -\frac{1}{R+h} & 0 \\ \frac{1}{R+h} & 0 & 0 \\ 0 & \frac{\tan\varphi}{R+h} & 0 \end{bmatrix}$$

$$\mathbf{F}_{33} = -[\omega_{in}^n]\times = \begin{bmatrix} 0 & -(\Omega_E + \dot\lambda)\sin\varphi & \dot\varphi \\ (\Omega_E + \dot\lambda)\sin\varphi & 0 & (\Omega_E + \dot\lambda)\cos\varphi \\ -\dot\varphi & -(\Omega_E + \dot\lambda)\cos\varphi & 0 \end{bmatrix}$$

$$(34)$$

where $\Omega_E$ is the Earth rotation rate.

For the system noise model the gamma matrix is computed according:

$$\mathbf{\Gamma} = \begin{bmatrix} \mathbf{I}_{9\times 9} & \begin{array}{cc} \mathbf{0}_{3\times 3} & \mathbf{0}_{3\times 3} \\ -\mathbf{R}_b^n & \mathbf{0}_{3\times 3} \\ \mathbf{0}_{3\times 3} & -\mathbf{R}_b^n \end{array} & \mathbf{0}_{9\times 9} \\ \mathbf{0}_{9\times 9} & \mathbf{0}_{9\times 6} & \begin{array}{ccc} \sqrt{2\beta_{f^b}} \cdot \mathbf{I}_{3\times 3} & & \\ & \sqrt{2\beta_\omega} \cdot \mathbf{I}_{3\times 3} & \\ & & \sqrt{2\beta_{d_m}} \cdot \mathbf{I}_{3\times 3} \end{array} \end{bmatrix}$$

$$(35)$$

Furthermore, the matrix $Q_k$ is given by:

$$\mathbf{Q}_k = |\Delta t| \cdot diag(\sigma_r^2 \quad \sigma_v^2 \quad \sigma_\epsilon^2 \quad \sigma_f^2 \quad \sigma_\omega^2 \quad \sigma_{w_{f^b}}^2 \quad \sigma_{w_{b_\omega}}^2 \quad \sigma_{w_{d_m}}^2)$$

$$(35)$$

where the σ represent the noise variances.

The system noise matrix $Q_{ww}$ is thus computed as an approximation of:

$$\mathbf{Q}_{ww} = \int_0^{\Delta t} \phi(t) \cdot \mathbf{\Gamma} \cdot \mathbf{Q}_k \cdot \mathbf{\Gamma}^T \cdot \phi(t)^T \, dt$$

$$\approx \int_0^{\Delta t} (\mathbf{I} + \mathbf{F}(t) \cdot \Delta t) \cdot \mathbf{\Gamma} \cdot \mathbf{Q}_k \cdot \mathbf{\Gamma}^T \cdot (\mathbf{I} + \mathbf{F}(t) \cdot \Delta t)^T \, dt$$

by neglecting higher order ($\geq O(\Delta t^2)$). $Q_{ww}$ is thus computed according:

$$\mathbf{Q}_{ww} \approx \mathbf{\Gamma} \cdot \mathbf{Q}_k \cdot \mathbf{\Gamma} \cdot \Delta t \tag{36}$$

## 1.4.4. UPDATE STEP

The flow chart of the loosely coupled approach is illustrated at figure 5. In this approach, GPS coordinates and velocities are fed to the Kalman filter (EKF or UKF) as external aiding to the INS measurements (gyroscope and accelerometer measurements). In addition, magnetometer measurements are introduced at the update stage.

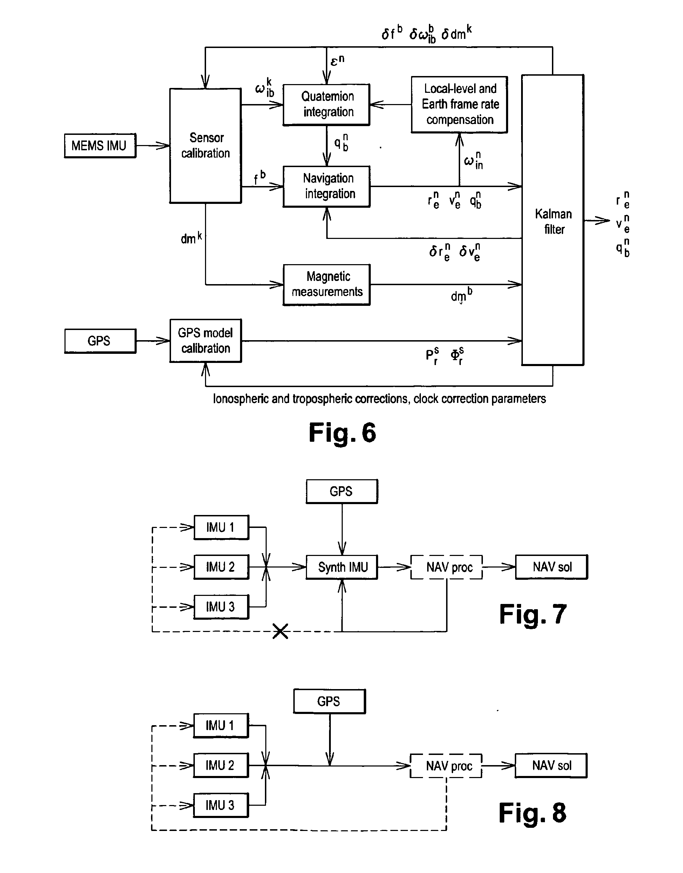

The flow chart of the closely coupled approach is illustrated at figure 6. According this approach, the double-differenced carrier-phase smoothed GPS pseudorange and Doppler measurements are integrated with the INS measurements. Again, the magnetometer measurements are introduced as external aiding. Closely coupled methods allow integrating GPS and inertial measurements even if the number of observed satellites drops below four. In this approach, GPS data from individual satellites can be used or rejected at the measurement update of the Kalman filter. The closely coupled approach is more robust for an incomplete constellation (and especially for very poor geometry with position dilution of prediction greater than 50) and it offers superior performance compared to loosely coupled systems under these circumstances. When the number of satellites falls below three, the positioning accuracy deteriorates rapidly and is dominated by the errors of inertial navigation. For partial GPS outages lasting 20s, the horizontal position error is improved by a factor of 15 when only two GPS satellites were visible.

However, when the satellite geometry was reasonable (i.e. > 4 SVs), the closely coupled approach do not significantly better performance than the loosely coupled approach while being more cost-processing.

Loosely couple approach:

In the loosely couple approach, the GPS coordinate, the GPS velocity and magnetic measurements are used for update.

The GPS coordinate measurement model is computed as follow:

$$h_r(\hat{\mathbf{x}}_k^-) = \mathbf{r}_{IMU}^n + \mathbf{D}^{-1} \mathbf{R}_b^n \cdot \mathbf{o}^b + \mathbf{w}_r \tag{37}$$

where $\mathbf{W}_r$ is the position measurement noise, $\mathbf{O}^b$ is the lever-arm, $\mathbf{o}^n = \mathbf{R}_b^n \cdot \mathbf{o}^b = \begin{bmatrix} o_N & o_E & o_D \end{bmatrix}^T$ is the coordinates of the GPS antenna expressed with respect to the IMU navigation center.

The GPS velocity measurement, derived from differentiation of equation (37), is computed according :

$$h_v(\hat{\mathbf{x}}_k^-) = \mathbf{v}_{IMU}^n + \delta\mathbf{R}_b^n \mathbf{o}^b$$
$$\delta\mathbf{R}_b^n = [\omega_{nb}^n \times]\mathbf{R}_b^n \tag{38}$$

The magnetic measurement model is computed according to:

$$h_m(\hat{\mathbf{x}}_k^-) = \mathbf{R}_n^b[\mathbf{h}^n] \times \boldsymbol{\epsilon}^n - \mathbf{d}_m + \mathbf{w}_m$$
$$\mathbf{E}^n = [\boldsymbol{\epsilon}^n]\times = \begin{bmatrix} 0 & -\epsilon_D & \epsilon_E \\ \epsilon_D & 0 & -\epsilon_N \\ -\epsilon_E & \epsilon_N & 0 \end{bmatrix} \tag{39}$$

where $\mathbf{E}^n$ is the skew symmetric matrix representing the misalignment errors.

At epochs where position, velocity and magnetometer observations are sufficiently accurate, the measurement matrix and its covariance are computed according to:

$$\mathbf{H} = \begin{bmatrix} \mathbf{H}_r \\ \mathbf{H}_v \\ \mathbf{H}_m \end{bmatrix}$$
$$\mathbf{R} = \begin{bmatrix} \mathbf{R}_r & & \\ & \mathbf{R}_v & \\ & & \mathbf{R}_m \end{bmatrix} \tag{40}$$

where $\mathbf{H}_r$, $\mathbf{H}_v$, $\mathbf{H}_m$ are the measurement matrices for position, velocity and magnetometer observations, derived from differentiation of the measurement model for the Kalman gain computation the update of the error covariance, and $\mathbf{R}_r$, $\mathbf{R}_v$, $\mathbf{R}_m$ are the corresponding covariance matrices,
with :

$$\mathbf{H}_r = \begin{bmatrix} \mathbf{I}_{3\times3} + \delta(\mathbf{D}^{-1})\mathbf{o}^n & \mathbf{0}_{3\times3} & -\mathbf{D}^{-1}\mathbf{O}^n & \mathbf{0}_{3\times9} \end{bmatrix}$$
$$\mathbf{O}^n = [\mathbf{o}^n\times] = [\mathbf{R}_b^n \cdot \mathbf{o}^b\times]$$
$$\delta(\mathbf{D}^{-1})\mathbf{o}^n = \begin{bmatrix} 0 & 0 & -\dfrac{a_N}{(R+h)^2} \\ \dfrac{a_E \tan\varphi}{(R+h)\cos\varphi} & 0 & -\dfrac{a_E}{(R+h)^2 \cos\varphi} \\ 0 & 0 & 0 \end{bmatrix} \tag{41}$$

$$\mathbf{R}_r = \begin{bmatrix} (\frac{\sigma_{r_N}}{R+h})^2 & 0 & 0 \\ 0 & (\frac{\sigma_{r_E}}{(R+h)\cos\varphi})^2 & 0 \\ 0 & 0 & \sigma_{r_D}^2 \end{bmatrix} \tag{42}$$

$$\mathbf{H}_v = \begin{bmatrix} \mathbf{O}^n \mathbf{D}_1 & | & \mathbf{I}_{3\times3} + \mathbf{O}^n \mathbf{D}_2 & | & \mathbf{O}^n(\Omega_{in}^n + 2\Omega_{nb}^b) & | & \mathbf{0}_{3\times3} & | & -\mathbf{O}^n \mathbf{R}_b^n & | & \mathbf{0}_{3\times3} \end{bmatrix}$$

$$\mathbf{D}_1 = \frac{\partial \boldsymbol{\omega}_{in}^n}{\partial \mathbf{r}} = \begin{bmatrix} -\Omega_E \sin\varphi & 0 & -\frac{v_E}{(R+h)^2} \\ 0 & 0 & \frac{v_N}{(R+h)^2} \\ -(\Omega_E \cos\varphi + \frac{v_E}{R+h}) & 0 & \frac{v_E \tan\varphi}{(R+h)^2} \end{bmatrix}$$

$$\mathbf{D}_2 = \frac{\partial \boldsymbol{\omega}_{in}^n}{\partial \mathbf{v}} = \begin{bmatrix} 0 & \frac{1}{R+h} & 0 \\ -\frac{1}{R+h} & 0 & 0 \\ 0 & -\frac{\tan\varphi}{R+h} & 0 \end{bmatrix}$$

with the notation $\Omega_\beta^\alpha = \lfloor \omega_\beta^\alpha \rfloor \times$

$$\mathbf{R}_v = \begin{bmatrix} \sigma_{vN}^2 & 0 & 0 \\ 0 & \sigma_{vE}^2 & 0 \\ 0 & 0 & \sigma_{vD}^2 \end{bmatrix} \tag{44}$$

$$\mathbf{H}_m = \begin{bmatrix} \mathbf{0}_{3\times3} & | & \mathbf{0}_{3\times3} & | & \mathbf{R}_n^b [\mathbf{h}^n] \times & | & \mathbf{0}_{3\times6} & | & -\mathbf{I}_{3\times3} \end{bmatrix}$$
$$\tag{45}$$

$$\mathbf{R}_m = \sigma_m \cdot \mathbf{I}_{3\times3} \tag{46}$$

Closely couple approach

In the closely coupled approach, the double-differenced, phase-smooth GPS code, double-differenced Doppler measurements, and magnetometer measurements are used as external aiding to the INS measurements.
The double-differenced code measurement model is computed according:

$$\rho_r^{s-} = \sqrt{(g(\mathbf{r}^s) - g(\mathbf{r}^n + \mathbf{D}^{-1}\mathbf{R}_b^n\mathbf{o}^b))^T \cdot (g(\mathbf{r}^s) - g(\mathbf{r}^n + \mathbf{D}^{-1}\mathbf{R}_b^n\mathbf{o}^b))}$$

$$(47)$$

where g is here the function that converts geographic to Cartesian coordinates.

The GPS double-differenced Doppler measurement model is computed according equation (10), that is to say:

$$\nabla\Delta\dot{p}_{mr}^{zs} - v_{mr}^{zs} = \nabla\Delta\dot{\rho}_{mr}^{zs} \qquad (48)$$

The magnetic measurement model has already been presented in equation (39).

At epochs where position, velocity and magnetometer observations are sufficiently accurate, the measurement matrix $\mathbf{H}$ and its covariance $\mathbf{R}$ are computed according to:

$$\mathbf{H} = \begin{bmatrix} \mathbf{H}_{DDp} \\ \mathbf{H}_{DD\dot\phi} \\ \mathbf{H}_m \end{bmatrix}$$

$$\mathbf{R} = \begin{bmatrix} \mathbf{R}_{DDp} & & \\ & \mathbf{R}_{DD\dot\phi} & \\ & & \mathbf{R}_m \end{bmatrix} \qquad (49)$$

with:

$$\mathbf{H}_{DDp} = \mathbf{H}_{DD,ECEF} \cdot \mathbf{H}_f \cdot \mathbf{H}_r$$

$$\mathbf{H}_{DD,ECEF} = \begin{bmatrix} \dfrac{\Delta x^z}{\rho_r^{z-}} - \dfrac{\Delta x^s}{\rho_r^{s-}} & \dfrac{\Delta y^z}{\rho_r^{z-}} - \dfrac{\Delta y^s}{\rho_r^{s-}} & \dfrac{\Delta z^z}{\rho_r^{z-}} - \dfrac{\Delta z^s}{\rho_r^{s-}} \end{bmatrix}$$

$$(50)$$

where $\mathbf{H}_f$ is the derivative of the transformation function from curvelinear to Cartesian coordinates with respect to the position $\mathbf{r}^n$.

$$\mathbf{R}_{DDp} = \mathbf{F}_{\nabla\Delta p,\Delta p} \cdot \mathbf{F}_{\Delta p,p} \cdot \mathbf{R}_p \cdot \mathbf{F}_{\Delta p,p}^T \cdot \mathbf{F}_{\nabla\Delta p,\Delta p}^T$$

$$\mathbf{F}_{\nabla\Delta p,\Delta p} = \begin{bmatrix} \mathbf{I}_{nsat} & -\mathbf{I}_{nsat} \end{bmatrix}$$

$$\mathbf{F}_{\Delta p,p} = \left[ \begin{array}{c|c} \begin{array}{c} 1 \\ 1 \\ 1 \\ 1 \\ 1 \end{array} & -\mathbf{I}_{nsat-1} \\ & \end{array} \right],$$

$$(50)$$

where *nsat* is the number of satellite measurements retained for the computation.

$$\mathbf{H}_{DD\dot{p}} = \mathbf{H}_{DD\dot{p},ECEF} \cdot \mathbf{H}_{R_e^n} \cdot \mathbf{H}_v$$
$$\mathbf{H}_{DD\dot{p},ECEF} = \left[ \begin{array}{cccccc} a_{mr}^{zs} & b_{mr}^{zs} & c_{mr}^{zs} & d_{mr}^{zs} & e_{mr}^{zs} & f_{mr}^{zs} \end{array} \right]$$

$$(52)$$

$$a_{mr}^{zs} = \left[ \begin{array}{ccc} \frac{1}{\rho_r^{z-}} - \frac{(\Delta x^{z-})^2}{(\rho_r^{z-})^3} & -\frac{\Delta x^{z-}\,\Delta y^{z-}}{(\rho_r^{z-})^3} & -\frac{\Delta x^{z-}\,\Delta z^{z-}}{(\rho_r^{z-})^3} \end{array} \right] \left[ \begin{array}{c} \Delta \dot{x}^{z-} \\ \Delta \dot{y}^{z-} \\ \Delta \dot{z}^{z-} \end{array} \right]$$

$$- \left[ \begin{array}{ccc} \frac{1}{\rho_r^{s-}} - \frac{(\Delta x^{s-})^2}{(\rho_r^{s-})^3} & -\frac{\Delta x^{s-}\,\Delta y^{s-}}{(\rho_r^{s-})^3} & -\frac{\Delta x^{s-}\,\Delta z^{s-}}{(\rho_r^{s-})^3} \end{array} \right] \left[ \begin{array}{c} \Delta \dot{x}^{s-} \\ \Delta \dot{y}^{s-} \\ \Delta \dot{z}^{s-} \end{array} \right]$$

$$b_{mr}^{zs} = \left[ \begin{array}{ccc} -\frac{\Delta x^{z-}\,\Delta y^{z-}}{(\rho_r^{z-})^3} & \frac{1}{\rho_r^{z-}} - \frac{(\Delta y^{z-})^2}{(\rho_r^{z-})^3} & -\frac{\Delta y^{z-}\,\Delta z^{z-}}{(\rho_r^{z-})^3} \end{array} \right] \left[ \begin{array}{c} \Delta \dot{x}^{z-} \\ \Delta \dot{y}^{z-} \\ \Delta \dot{z}^{z-} \end{array} \right]$$

$$- \left[ \begin{array}{ccc} \frac{\Delta x^{s-}\,\Delta y^{s-}}{(\rho_r^{s-})^3} & \frac{1}{\rho_r^{s-}} - \frac{(\Delta y^{s-})^2}{(\rho_r^{s-})^3} & -\frac{\Delta y^{s-}\,\Delta z^{s-}}{(\rho_r^{s-})^3} \end{array} \right] \left[ \begin{array}{c} \Delta \dot{x}^{s-} \\ \Delta \dot{y}^{s-} \\ \Delta \dot{z}^{s-} \end{array} \right]$$

$$c_{mr}^{zs} = \left[ -\frac{\Delta x^{z-}\Delta z^{z-}}{(\rho_r^{z-})^3} \quad -\frac{\Delta x^{z-}\Delta z^{z-}}{(\rho_r^{z-})^3} \quad \frac{1}{\rho_r^{z-}} - \frac{(\Delta z^{z-})^2}{(\rho_r^{z-})^3} \right] \begin{bmatrix} \Delta \dot{x}^{z-} \\ \Delta \dot{y}^{z-} \\ \Delta \dot{z}^{z-} \end{bmatrix}$$

$$- \left[ -\frac{\Delta x^{s-}\Delta z^{s-}}{(\rho_r^{s-})^3} \quad -\frac{\Delta x^{s-}\Delta z^{s-}}{(\rho_r^{s-})^3} \quad \frac{1}{\rho_r^{s-}} - \frac{(\Delta z^{s-})^2}{(\rho_r^{s-})^3} \right] \begin{bmatrix} \Delta \dot{x}^{s-} \\ \Delta \dot{y}^{s-} \\ \Delta \dot{z}^{s-} \end{bmatrix}$$

$$d_{mr}^{zs} = \frac{\Delta x^{z-}}{\rho_r^{z-}} - \frac{\Delta x^{s-}}{\rho_r^{s-}}$$

$$e_{mr}^{zs} = \frac{\Delta y^{z-}}{\rho_T^{z-}} - \frac{\Delta y^{s-}}{\rho_r^{s-}}$$

$$f_{mr}^{zs} = \frac{\Delta z^{z-}}{\rho_r^{z-}} - \frac{\Delta z^{s-}}{\rho_r^{s-}}$$

where $\mathbf{H}_{R_e^n}$ is the derivative of the rotation $\mathbf{R}_e^n$ from the Earth fixed reference frame to the NED (local level) frame.

## 1.4. UNSCENTED KALMAN FILTERING

According to an other embodiment of the invention, a scaled UKF algorithm is carried out. Unlike EKF, UKF does not need for linearization, especially linearization of measurement model, which leads to the specific equations according to the invention previously presented. Accordingly, the UKF algorithm is not described in details. Such an algorithm is described in E.-H. Shin. "*Estimation Techniques for Low-Cost Inertial Navigation* ". PhD thesis, UCGE Report Number 20219, 2005.

The state propagation models for UKF are described in equation (19), (23), (28) and (30), the measurement models in equation (37), (38), and (39).

## 1.5. SMOOTHING PROCEDURE - BACKWARD PROPAGATION

Advantageously, the navigation performance is improved through the appropriate selection of the processing direction. Indeed, the visibility of satellites often varies along the tracks. Furthermore, favourable situations for sensor calibration (static periods, large dynamics) may be located at either end of the trajectories. In addition, the navigation performance can be improved by smoothing which is the combination of results obtained by processing the trajectories in forward and/or backward direction.

The following fixed-interval smoothing algorithm combines forward and backward filtered data sets in the least squares sense. It can be implemented for the EKF and the UKF.

$$\mathbf{P}_s = (\mathbf{P}_f^{-1} + \mathbf{P}_b^{-1})^{-1}$$
$$\mathbf{x}_s = \mathbf{x}_f^+ + \mathbf{P}_s \mathbf{P}_b^{-1}(\mathbf{x}_b^+ - \mathbf{x}_f^+) \tag{53}$$

where x is the predicted (superscript -) or adjusted (superscript +) state vector with corresponding covariance matrix **P**. Indexes f, b and s indicate forward or backward processed and smoothed states or covariances.

For the EKF, when data are processed in one direction (forward or backward), the Rauch-Tung-Striebel (RTS) algorithm is applied:

$$\mathbf{x}_{s,k} = \mathbf{x}_k^+ + \mathbf{J}_k \cdot (\mathbf{x}_{s,k+1} - \mathbf{x}_{k+1}^-)$$
$$\mathbf{P}_{s,k} = \mathbf{P}_k^+ + \mathbf{J}_k \cdot (\mathbf{P}_{s,k+1} - \mathbf{P}_{k+1}^-) \cdot \mathbf{J}_k^T \tag{54}$$
$$\mathbf{J}_k = \mathbf{P}_k^+ \cdot \mathbf{\Phi}_k^T \cdot (\mathbf{P}_{k+1}^-)^{-1}$$

where index k and k + 1 indicate two successive measurement epochs.

The backward mechanization equations can be easily derived from equations (19) (orientation prediction), (23) (velocity prediction) and (28) (position prediction) and (30) (extra states prediction). The change in sign of $\Delta t$ switches the mentioned equations to backward mode. Only in equation (35), the absolute value $|\Delta t|$ has to be applied.

## 1.6. PERFORMANCE IMPROVEMENT THROUGH REDONDANT IMUS

The integration described previously reveals position accuracies ranging from few cm to halfmeter accuracy while using low-cost GPS single-frequency receiver and MEMs-IMU.

To further improve navigation performance, redundant sensors are used. While using redundant GPS receivers would not reduce the system's limitations inherent to satellite navigation, using redundant MEMS-IMU seems to be an ergonomically and economically viable alternative. Indeed, these devices can be highly miniaturized and hence it is possible to exploit numerous MEMS-IMU sensors for enhancing the navigation performance, more particularly in sports.

The IMU redundancy improves the GPS/INS integration performance on several levels.

Firstly, noise estimation can be achieved directly from the data and the stochastic parameters are hence closer to reality. Secondly, the noise level is reduced. Furthermore, sensor error calibration (and hence orientation estimation) becomes conceivable even during uniform motion or static initialization. Due to the improved navigation accuracy, redundant IMUs bridge the gaps in the GPS data more effectively. Finally, more accurate orientation determination is expected with redundant IMU configurations.

## 1.5.1. GEOMETRIC CONFIGURATION

Advantageously, in place of a single MEMs-IMU, a triad of MEMs-IMU sensors, in an orthogonally redundant arrangement or in a skew redundant arrangement, is provided. The geometry of skew arrangement is for example described in document A. Osman, B. Wright, S. Nassar, A. Noureldin, and N. El-Sheimy, "Multi-Sensor Inertial Navigation Systems Employing Skewed Redundant Inertial Sensors ", in Proceedings of the ION GNSS 2006, Fort Worth, TX, USA, 2006, in document M.A. Sturza, "Navigation System Integrity Monitoring Using Redundant Measurements", Journal of the Institute of Navigation, 35(4):69-87, 1988, or in document A.J. Pejsa, "Optimum Skewed Redundant Inertial Navigators", AIAA Journal, 12:899-902, 1974. Alternatively, any number of MEMs-IMU is used

## 1.5.2. DIRECT NOISE ESTIMATION

The use of multiple MEMs-IMU offers the possibility to estimate the eventually varying noise level for the inertial data during the processing. The resulting adaptation of the stochastic parameters thus improves the navigation performance and makes the Kalman filtering more stable.

The following algorithm is carried out for a system set up of triads of inertial sensors. Firstly, the norms, which are less sensitive to the orientation of the inertial and magnetic measurements, are computed at each instant k and for

every sensor i:

$$\bar{\ell}_i(k) = \sqrt{\ell_{xi}^2(k) + \ell_{yi}^2(k) + \ell_{zi}^2(k)} \tag{55}$$

where $l = [l_x\, l_y\, l_z]^T$ is a measurement (specific force, angular velocity or magnetic), i=1,...,n and n is the number of sensor triands.

Then, square differences are computed to form the **d** matrices:

$$\mathbf{d}_{\bar{\ell}}(n,k) = \begin{bmatrix} (\bar{\ell}_1(k) - \frac{\sum_{j=2}^n \bar{\ell}_j(k)}{n-1})^2 \\ \dots \\ (\bar{\ell}_n(k) - \frac{\sum_{j=1}^{n-1} \bar{\ell}_j(k)}{n-1})^2 \end{bmatrix} \tag{56}$$

An averaging time T, typically of a few seconds, is chosen and assuming that all sensors' errors are uncorrelated and identical, the noise is directly estimated by:

$$\sigma_\ell(k,T) = \sqrt{\frac{1}{n} \int_{k-T}^{k+T} (\sum_{i=1}^n \mathbf{d}_{\bar{\ell}}(i,k)) \cdot dt} \tag{57}$$

1.5.3. SYSTEM AND OBSERVATION MODEL FOR THE REDUNDANT IMU INTEGRATION

According a first embodiment (the synthetic IMU integration), the inertial measurements are combined within the observation space to generate a synthetic set of observations that are then integrated by the GPS/INS algorithm described previously. In a second embodiment (the extended IMU integration), the mechanization equations are adapted to account for the redundant measurement.

Synthetic IMU integration

Figure 7 illustrates the principle of mechanization based on a synthetic IMU integration. The integration principle is described in more detail in I. Colomina, M. Gim_enez, J.J. Rosales, M. Wis, A. G_omez, and P. Miguelsanz, "Redundant IMUs for Precise Trajectory Determination", in Proceedings of the XXth ISPRS Congress, Istanbul, Turkey, Working Group I/5, 2004. In this approach, the redundant IMU data is merged into a synthetic set of measurements before being introduced to the GPS/INS algorithm based on the single IMU mechanization. While fusing the IMU data, defective sensors can be detected and realistic noise and covariance terms can be estimated. However, the "compound" biases estimated by the EKF cannot be back-projected to the individual sensors.

In a first step, synthetic measurements $\omega^b$, $\mathbf{f}^b$ and $\mathbf{m}^b$ are generated from the individual measurements $\ell_\omega^b$, $\ell_f^b$ and $\ell_m^b$:

$$\begin{aligned}
\omega^b &= \Pi_\omega \, \ell_\omega^b \\
\mathbf{f}^b &= \Pi_f \, \ell_f^b \\
\mathbf{m}^b &= \Pi_m \, \ell_m^b
\end{aligned} \tag{58}$$

where the orthogonal projectors $\Pi_\ell$ for the angular rates, $\Pi_f$ for the linear accelerations and $\Pi_m$ for the magnetic measurements are given by:

$$\begin{aligned}
\Pi_\omega &= (\mathbf{A}_\omega^T \, \mathbf{P}_{\ell_\omega^b \ell_\omega^b} \, \mathbf{A}_\omega)^{-1} \, \mathbf{A}_\omega^T \, \mathbf{P}_{\ell_\omega^b \ell_\omega^b} \\
\Pi_f &= (\mathbf{A}_f^T \, \mathbf{P}_{\ell_f^b \ell_f^b} \, \mathbf{A}_f)^{-1} \, \mathbf{A}_f^T \, \mathbf{P}_{\ell_f^b \ell_f^b} \\
\Pi_m &= (\mathbf{A}_m^T \, \mathbf{P}_{\ell_m^b \ell_m^b} \, \mathbf{A}_m)^{-1} \, \mathbf{A}_m^T \, \mathbf{P}_{\ell_m^b \ell_m^b}
\end{aligned} \tag{59}$$

and their respective accuracy estimated by :

$$\begin{aligned}
\mathbf{P}_{\omega^b \omega^b} &= \mathbf{A}_\omega^T \, \mathbf{P}_{\ell_\omega^b \ell_\omega^b} \, \mathbf{A}_\omega \\
\mathbf{P}_{f^b f^b} &= \mathbf{A}_f^T \, \mathbf{P}_{\ell_f^b \ell_f^b} \, \mathbf{A}_f \\
\mathbf{P}_{m^b m^b} &= \mathbf{A}_m^T \, \mathbf{P}_{\ell_m^b \ell_m^b} \, \mathbf{A}_m
\end{aligned} \tag{60}$$

$\mathbf{A}_\omega$, $\mathbf{A}_f$ and $\mathbf{A}_m$ matrices transform the data from the actual sensor axes to the three orthogonal axes of the predefined body frame $b$. Their rows contain the direction cosine vectors of the angular rate sensor and accelerometer axes:

$$\mathbf{A}_\omega = \begin{bmatrix} \mathbf{R}_b^{b\omega 1} \\ \dots \\ \mathbf{R}_b^{b\omega i} \\ \dots \\ \mathbf{R}_b^{b\omega n} \end{bmatrix} \qquad \mathbf{A}_f = \begin{bmatrix} \mathbf{R}_b^{bf1} \\ \dots \\ \mathbf{R}_b^{bfi} \\ \dots \\ \mathbf{R}_h^{bfn} \end{bmatrix} \qquad \mathbf{A}_m = \begin{bmatrix} \mathbf{R}_b^{bm1} \\ \dots \\ \mathbf{R}_b^{bmi} \\ \dots \\ \mathbf{R}_b^{bmn} \end{bmatrix}$$

$$\tag{61}$$

Extended IMU integration

Similar to the synthetic approach, the extended mechanization also allows detecting defective sensors and estimating noise and covariance terms (see figure 8). Moreover, this method permits modelling and estimation of the systematic errors separately for each sensor. However, pursuing this methodology requires the modification of GPS/INS software to accommodate the new expression of the mechanization equations.

To estimate individual sensor errors, the strapdown navigation equations need to be reviewed accordingly. The velocity and orientation error models thus become:

$$\dot{\delta \mathbf{v}}^n = -(\mathbf{R}_b^n \mathbf{\Pi}_f \ell_f^b) \times \epsilon^n + \mathbf{R}_b^n \mathbf{\Pi}_f \delta \ell_f^b -$$
$$(\omega_{in}^n + \omega_{ie}^n) \times \delta \mathbf{v}^n - (\delta \omega_{in}^n + \delta \omega_{ie}^n) \times \mathbf{v}^n + \delta \mathbf{g}^n$$
$$\dot{\epsilon}^n = \mathbf{R}_b^n \mathbf{\Pi}_\omega \delta \ell_\omega^b - \delta \omega_{in}^n - \omega_{in}^n \times \epsilon^n$$

$$(62)$$

On the other hand, the magnetic error model becomes:

$$\mathbf{h}_m(\hat{x}_k^-) = \mathbf{\Pi}_m \mathbf{R}_n^b [\mathbf{h}^n] \times \epsilon^n - \mathbf{d}_m + \mathbf{w}_m \qquad (63)$$

Meanwhile, the orientation and velocity propagation equations respectively becomes:

$$\mathbf{u}_b^b \approx \mathbf{\Pi}_\omega (\ell_\omega^b)_k \cdot (t_{k+1} - t_k)$$
$$(\Delta \mathbf{v}_f^n)_{k+1} \approx (\mathbf{R}_b^n)_{k+1|k} \mathbf{\Pi}_f \cdot (\ell_f^b)_k \cdot \Delta t \qquad (64)$$

The generalized system matrix **F** is thus expressed as follow, *m* being the number of gyroscopes, *n* the number of accelerometers and *p* the number of magnetometers:

$$\mathbf{F} = \left[ \begin{array}{c|ccc} \mathbf{F}_{main} & \begin{array}{cc} \mathbf{0}_{3\times m} & \mathbf{0}_{3\times n} \\ \mathbf{R}_b^n \cdot \mathbf{\Pi}_f & \mathbf{0}_{3\times n} \\ \mathbf{0}_{3\times m} & \mathbf{R}_b^n \cdot \mathbf{\Pi}_\omega \end{array} & \mathbf{0}_{9\times p} \\ \hline \begin{array}{c} \mathbf{0}_{m\times 9} \\ \mathbf{0}_{n\times 9} \\ \mathbf{0}_{k\times 9} \end{array} & \begin{array}{cc} -\beta_f \cdot \mathbf{I}_{m\times m} & \mathbf{0}_{m\times n} \\ \mathbf{0}_{n\times m} & -\beta_\omega \cdot \mathbf{I}_{n\times n} \\ \mathbf{0}_{k\times m} & \mathbf{0}_{k\times n} \end{array} & \begin{array}{c} \mathbf{0}_{m\times k} \\ \mathbf{0}_{n\times k} \\ -\beta_{d_m} \cdot \mathbf{I}_{k\times k} \end{array} \end{array} \right]$$

$$(65)$$

Furthermore, the gamma matrix $\Gamma$ is given by (66):

$$\mathbf{\Gamma} = \left[ \begin{array}{c|c|c} \mathbf{I}_{9\times 9} & \begin{array}{cc} \mathbf{0}_{3\times 3} & \mathbf{0}_{3\times 3} \\ -\mathbf{R}_b^n \cdot \mathbf{\Pi}_f & \mathbf{0}_{3\times 3} \\ \mathbf{0}_{3\times 3} & -\mathbf{R}_b^n \cdot \mathbf{\Pi}_\omega \end{array} & \mathbf{0}_{(m+n+k)\times(m+n+k)} \\ \hline \mathbf{0}_{(m+n+k)\times 9} & \mathbf{0}_{(m+n+k)\times 6} & \begin{array}{ccc} \sqrt{2\beta_{f^b}} \cdot \mathbf{I}_m & & \\ & \sqrt{2\beta_\omega} \cdot \mathbf{I}_n & \\ & & \sqrt{2\beta_{d_m}} \cdot \mathbf{I}_k \end{array} \end{array} \right]$$

The generalized position update model is given by (67):

$$\mathbf{H}_r = \left[\ \mathbf{I}_{3\times3} + \delta(\mathbf{D}^{-1})\mathbf{o}^n\ \middle|\ \mathbf{0}_{3\times3}\ \middle|\ -\mathbf{D}^{-1}\mathbf{O}^n\ \middle|\ \mathbf{0}_{3\times(m+n+k)}\ \right]$$

The generalized velocity update model is given by (68):

$$\mathbf{H}_v = \left[\ \mathbf{O}^n\mathbf{D}_1\ \middle|\ \mathbf{I}_{3\times3} + \mathbf{O}^n\mathbf{D}_2\ \middle|\ \mathbf{O}^n(\Omega_{in}^n + 2\Omega_{nb}^b)\ \middle|\ \mathbf{0}_{3\times m}\ \middle|\ -\mathbf{O}^n\mathbf{R}_b^n \cdot \Pi_\omega\ \middle|\ \mathbf{0}_{3\times k}\ \right]$$

Finally the generalized magnetic update model is given by (69):

$$\mathbf{H}_m = \left[\ \mathbf{0}_{3\times3}\ \middle|\ \mathbf{0}_{3\times3}\ \middle|\ \mathbf{R}_n^b[\mathbf{h}^n]\times\ \middle|\ \mathbf{0}_{3\times(m+n)}\ \middle|\ -\mathbf{I}_{k\times k}\ \right]$$

## 2. TRAJECTORY CONSTRUCTION AND ANALYSIS

Trajectories determined by GPS and GPS/INS are characterized by a succession of discrete sample points (position, velocity and orientation). For convenient representation and efficient analysis, however, it is useful to represent trajectories as continuous curves. To compare trajectories, the positioning accuracy of the trajectories needs to be considered and may require additional filtering or trajectory matching steps.

Moreover representing a trajectory by mathematical functions rather than by a set of discrete points creates a basis that is not only better suited for subsequent analysis (e.g. derivating curvilinear distance, curvature estimation) but can also contribute to data filtering. Indeed, GPS, and to a smaller account GPS/INS, trajectories are affected by noise of higher frequency and may also present residual outliers which need to be removed as well as data gaps. As a matter of fact, in itself, the construction of a continuous curve from a set of sample data is an efficient way to correct inaccuracy of GPS measurement.

Furthermore, sport professionals like to visualize trajectories as continuous curves and to resample data sets at arbitrary data rates for synchronization with other trajectory information (e.g. forces, heart rates).

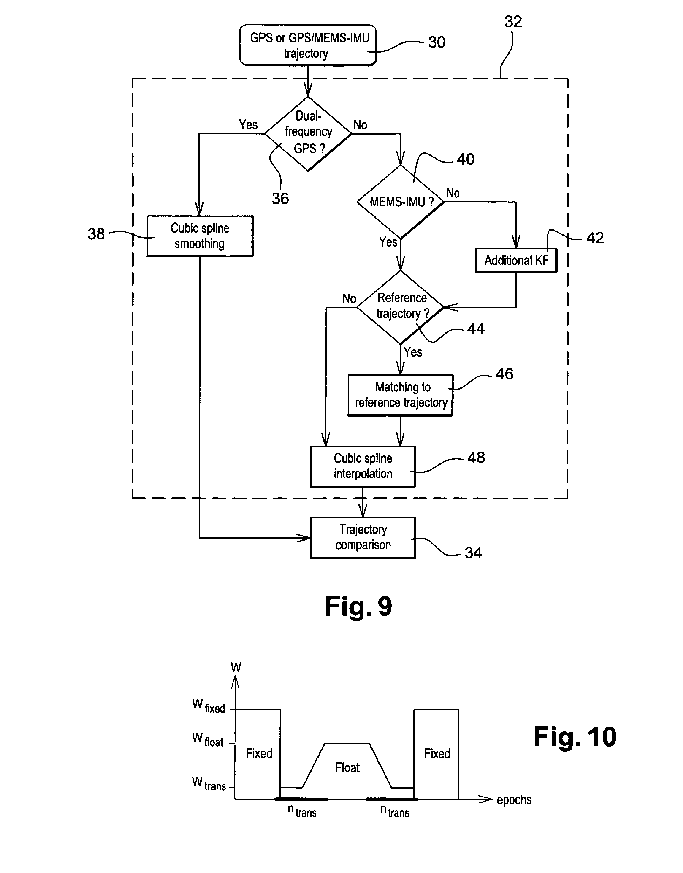

Figure 9 illustrates the trajectory construction and analysis according the invention. The method is carried out based on the type of hardware used to derive the position of a moving object, a skier being chosen as illustrative example. One has to note that each branch of this method is independent from the other branches and thus represents a method by itself.

First sample position data are acquired (step 30) using a GPS system. The GPS system may be a single-frequency receiver, a dual-frequency receiver, a differential receiver and/or may be couple to one ore more inertial units. A specific trajectory construction is then carried out (step 32), this construction being made in function of the type of GPS used for position acquisition and of external information available to correct error positioning (like e.g. positions and/or areas that the objet is supposed to follow, as it will be more apparent). Finally, once the trajectory is constructed, it is analyzed (step 34). More specifically, in sport where trajectory is an essential element for determining the skill of an athlete (skiing, car racing, ...), the trajectory is compared with some different trajectories (previous constructed trajectories and/and reference trajectories).

## 2.1. TRAJECTORY CONSTRUCTION

The trajectory to be constructed must reflect as much as possible the physical behavior of the moving object while taking into account the possible GPS positioning errors. Most of the moving objects, and more particularly athletes (e.g. skier) or vehicles (e.g. car or motorcycle), have motions continuous in position, velocity and acceleration with minimal variation in acceleration and velocity. Hence, trajectory construction tools meeting these criteria are preferred.

Advantageously, the cubic splines smoothing is applied (step 38) on the position data set, in particular when the GPS positioning accuracy is considered to be satisfying, as it is usually the case for dual frequency GPS positioning (branch "yes" of the test step 36).

Cubic splines are piecewise polynomials of the third degree that _t between adjustment points. Thanks to their piecewise character, they can take local particularities of any data interval into account. Furthermore, they respect the continuity in position, velocity (_rst-order derivative) and acceleration (second-order derivative) on the right and left of the adjustment points. The spline function minimizes the second-order derivative, i.e. the acceleration and the velocity variation, for a set of given initial conditions. This corresponds to the physics of athlete's motion. Hence, cubic splines are particularly well adapted for trajectory construction in sport applications. This smoothing spline f(x) minimizes the cost function $J$:

$$J = \lambda \sum_{k=1}^{N} w(j) \left[y(j) - f(x(j))\right]^2 + (1 - \lambda) \int_{t_0}^{t_N} \lambda(t) \left[\frac{d^2}{dt^2} f(t)\right]^2 dt$$

$$f(t) = \sum_{k \in \mathbb{Z}} g(k)\varphi(t - t_k)$$

$$\varphi(t - t_k) = \sum_{i=1}^{n} (t - t_k)^{4-i} c_{ki}$$

$$(70)$$

The first quadratic term of expression 70 represents the error contribution of the approximation $f(t)$ with respect to the adjustment, or measurement, points $y(j)$. When the local weights $w(j)$ increase, the smoothing effect of the interpolation is reduced. The second term imposes a constraint on the smoothness of the approximation. If $\lambda = 0$, the spline corresponds to the least-squares fit of a straight line to the data points $y(j)$. On the other hand, if $\lambda = 1$, the spline becomes a natural cubic-spline interpolant that follows the data. $\varphi(t-t_k)$ represents the polynomial piecewise basis and $g(k)$ their associated coeffcients. Smoothing splines minimize the cost function J as a function of the smoothing parameter $\lambda$. A detailed description of the spline algorithm can be found in P. Dierckx, "Curve and Surface Fitting with Splines ", New York: Oxford University Press Inc., 1993 or in C. De Boor, "A Practical Guide to Splines", Applied mathematical sciences, New York: Springer-Verlag, 2001

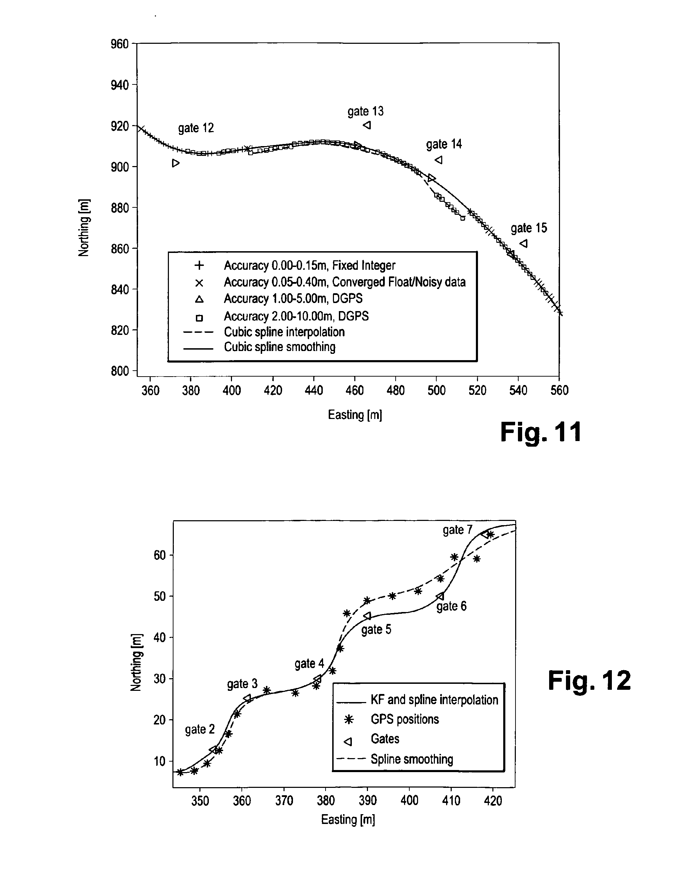

Through the definition of an appropriate weighting function $w(j)$, document Ph. Limpach, « Trajectographie de courses de ski avec GPS», Master's thesis, Ecole Polytechnique Fédérale de Lausanne, 2003 has developed an effective method representing trajectories derived from dual-frequency differential GPS. As illustrated in figure 10, small weights are attributed to the points during transition periods where carrier-phase ambiguities are fixed and float *(ntrans)*. Such strong de-weighting avoids discontinuities in the modeled trajectory due to sudden drops of accuracy while relying on the movement prediction due to athlete's inertia. For other transition epochs, $w(j)$ is linearly increasing in time from *wtrans* to the final value of *wfloat,* which is the value of $w(j)$ for epochs of float ambiguities outside the transition periods. This method is effective in filtering the dual-frequency GPS trajectory for sudden jumps due to abrupt changes in satellite constellation or in the measurement accuracy as it can be observed in figure 11 that represents the GPS positioning data during a ski racing amongst gates.

However, the previously described method becomes less adequate for differential GPS positioning using single-frequency data. Indeed, carrier-phase ambiguities can rarely be resolved with L 1 DGPS, especially with low-cost receivers under dynamic conditions. L 1 DGPS offers reduced accuracy in positioning, but not necessary in velocity estimates. Outliers in position are more frequent than with dual-frequency trajectory. To make matters worse, other distinctive information is absent (e.g. number of visible satellites, dilution of precision) or inaccessible, like the stochastic parameters related to the tracking performance in low-cost receivers (e.g. Phase Lock Loop). For these reasons, the spline smoothing is found to be less effective for single-frequency data.

In a preferred embodiment of the invention, when GPS positioning data results from an inaccurate receiver, like a L1 DGPS receiver for example, external information are injected to compensate for the error positioning.

First, if the GPS receiver is not coupled with a inertial navigation system (branch "no" of the test step 40), an additional extended Kalman filtering is carried out, in step 42, on data set based on assumption about velocity. Usually, velocity accuracy is better that position accuracy. Kalman filtering of position and velocity results provides an alternative solution for additional trajectory smoothing. A constant velocity model is advantageously implemented for state propagation:

$$(\mathbf{v}^n)_{k+1} = (\mathbf{v}^n)_k$$
$$(\mathbf{r}^n_e)_{k+1} = (\mathbf{r}^n_e)_k + \mathbf{D}^{-1} \cdot (\mathbf{v}^n)_k \cdot \Delta t \qquad (71)$$

More precisely, the state vector for the Kalman filtering contains the correction terms of the position and the velocity parameter, as defined by:

$$\delta\mathbf{x} = \begin{bmatrix} \delta\varphi \\ \delta\lambda \\ \delta h \\ \delta v_N \\ \delta v_E \\ \delta v_D \end{bmatrix} \qquad (72)$$

where the position errors $\delta r^n$ are defined by relations (12) and the velocity errors $\delta v^n$ are defined by relation $\delta\dot{v}^n = \mathbf{0}_{3\times1}$.

The initial position and velocity are determined by parametric adjustments of the double differenced, phase-smoothed GPS code and Doppler measurements based on the first and third relation of equations (13).

As said previously, for the state propagation, a constant velocity model is implemented (equations (71)). For the measurement update, double-differenced carrier-phase smoothed L1 pseudorange measurements are introduced at the update stage using the first relation of equations (10). The measurement matrix and the measurement covariance matrix used for Kalman gain filtering are given by equations (50) and (51).

As for GPS/INS integration, an optimal smoothing, analogue to the one described in equations (53) and (54) may be implemented.

Figure 12 illustrates, for a skier crossing gates during a downhill, a first trajectory, obtained by the extended Kalman filtering followed by a cubic spline interpolation, and a second trajectory obtained directly from cubic spline smoothing. As one can see, the Kalman filtering corrects positioning error since the obtained trajectory contains the gates, that is to say real positions of the skier.

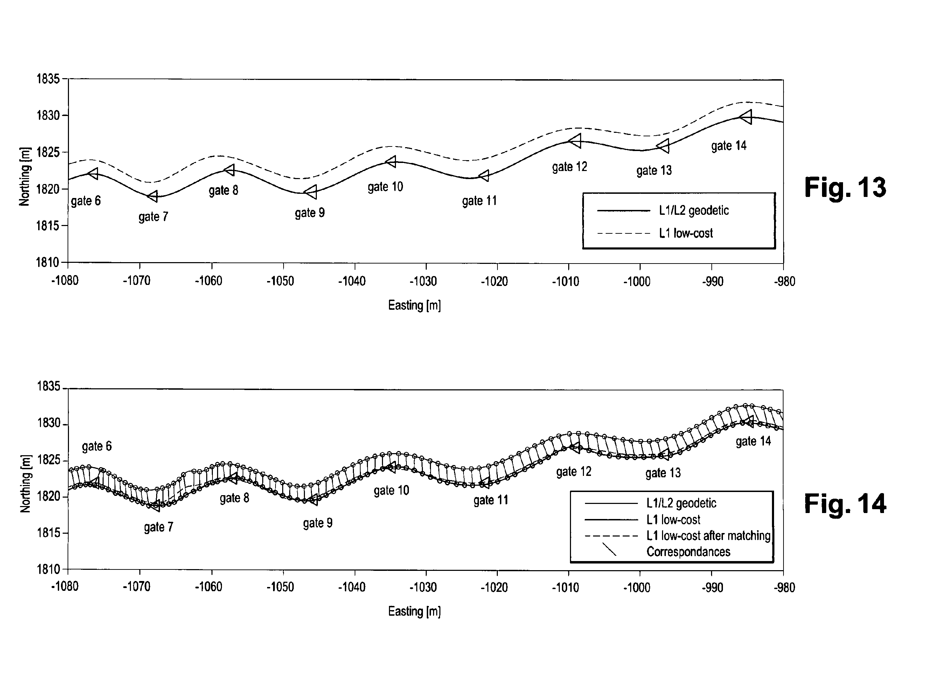

The additional Kalman filtering and spline interpolation thus reduces efficiently the high frequency noise in the trajectory data. However, they can not efficiently remove systematic error, e.g. constant position offsets in L1 DGPS as illustrated in figure 13 that illustrates trajectories obtained with the additional Kalman filtering and spline interpolation implemented respectively on low cost L1 DGPS data and L1/L2 geodetic data (essentially free from systematic errors).

Alternatively, other more sophisticated models may be employed.

Once Kalman filtering had been completed, or if the GPS receiver is coupled with an inertial navigation system, (branch "yes" of the test step 40), a test is made (step 44) to know if there exists a reference trajectory (thus free from systematic errors). If so, a trajectory matching is implemented, in step 46, to correct systematic error. The reference trajectory may be obtained from previous trials or synthetically designed based on experience or generated by interpoling the trajectory gate with a cubic spline in the skiing application. L.S. Shapiro and M. Brady, "Feature-Based Correspondence: an Eigenvector Approach. Image Vision Computing", 10(5):283-288, 1992 proposes an eigenvector approach for establishing a correspondence between tow set of points. This approach was developed for computer vision, and is known as the "Shapiro algorithm", but, according to the invention, is used for matching trajectories.

First a proximity matrix $\mathbf{H}$ is computed for the reference trajectory and the trajectory to be constructed, each considered in the easting and northing coordinates:

$$H_{i,j} = e^{-\frac{r_{i,j}^2}{2\cdot\sigma^2}} \tag{73}$$

where $r_{i,j} = \|x_i - x_j\|$, $\sigma$ controls the interaction between the features, a large value of $\sigma$ allowing more possibility for correspondences.

Next, the eigenvalue decomposition of **H** is computed:

$$\mathbf{H} = \mathbf{VDV}^T \tag{74}$$

The diagonal matrix **D** contains the positive eigenvalues along its diagonal in decreasing size. The modal matrix **V** is orthogonal and has the eigenvector **e** as its column vector. Each row of **V** can then be thought as a feature vector **f** containing the $n$ modal coordinates of feature i:

$$\mathbf{V} = \left[\ \mathbf{e}_1\ \middle|\ ...\ \middle|\ \mathbf{e}_n\ \right] = \left[\ \mathbf{f}_1\ \middle|\ ...\ \middle|\ \mathbf{f}_n\ \right]^T \tag{75}$$

The final stage is to correlate the two sets of feature vectors yielding the association matrix Z:

$$z_{i,j} = \left\|\mathbf{f}_i - \mathbf{f}_j\right\|^2 \tag{76}$$

$z_{i,j}$ reflects the confidence in the match between $x_i$ and $x_j$, As the trajectories have different numbers of points, their number of modes will differ. Therefore, the least significant modes (corresponding to the smallest eigenvalues) are truncated. The algorithm allows detecting correspondences of rotated, translated and distorted features.

However, the sign of each eigenvector is not unique. This disadvantage can be overcome by a sign correction (Shapiros'document) or by considering only the most important modes (i.e. those corresponding to the largest eigenvalues) (S. Epiney, "Modélisation de la trajectoire pour l'analyse de performances sportives ", Project de semestre, Ecole Polytechnique Fédérale de Lausanne, 2007).

Once the correspondences between the trajectories are correctly evaluated, the trajectories are matched. To do so, a 2D Helmert transformation is applied estimating a rotation ($\omega$) and translation ($\Delta E$, $\Delta N$) between two trajectories or trajectory segments. As the scale of the GPS trajectories is sufficiently stable, no scaling factor between the two trajectories is estimated:

$$\begin{aligned} \begin{bmatrix} E_1 \\ N_1 \end{bmatrix} &= \begin{bmatrix} \cos\omega & \sin\omega \\ -\sin\omega & \cos\omega \end{bmatrix} \begin{bmatrix} E_2 \\ N_2 \end{bmatrix} + \begin{bmatrix} \Delta E \\ \Delta N \end{bmatrix} \\ w_E &= \cos\omega \cdot E_2 + \sin\omega \cdot N_2 + \Delta E - E_1 \\ w_N &= -\sin\omega \cdot E_2 + \cos\omega \cdot N_2 + \Delta N - N_1 \end{aligned} \tag{77}$$

where E and N are the coordinate in the first (index 1) or the second (index 2) coordinate system, $\omega$) is the rotation between the two system, $\Delta E$ and $\Delta N$ are the translation with respect to east and north, and $\omega_E$ and $\omega_N$ are the misclosure terms of the Helmert transformation in east and north direction respectively.

After compensation, the statistical significance of the rotation can be estimated. Indeed, if $\omega > 3 \cdot \sigma_\omega$, the rotation is considered to be statistically meaningless at a threshold of 99.7% and a second computation without estimation of the rotation may be performed.

In a first variant, all the trajectory points are matched as illustrated in figure 14 wherein the trajectory to be constructed is the superior curve and the reference trajectory is the inferior curve. The size of the **H** and **Z** matrices as well as the computation time are important. This approach assumes that the translation and rotation are identical for the entire trajectory. However, this may be not true as the satellite constellation may vary during the trajectory duration

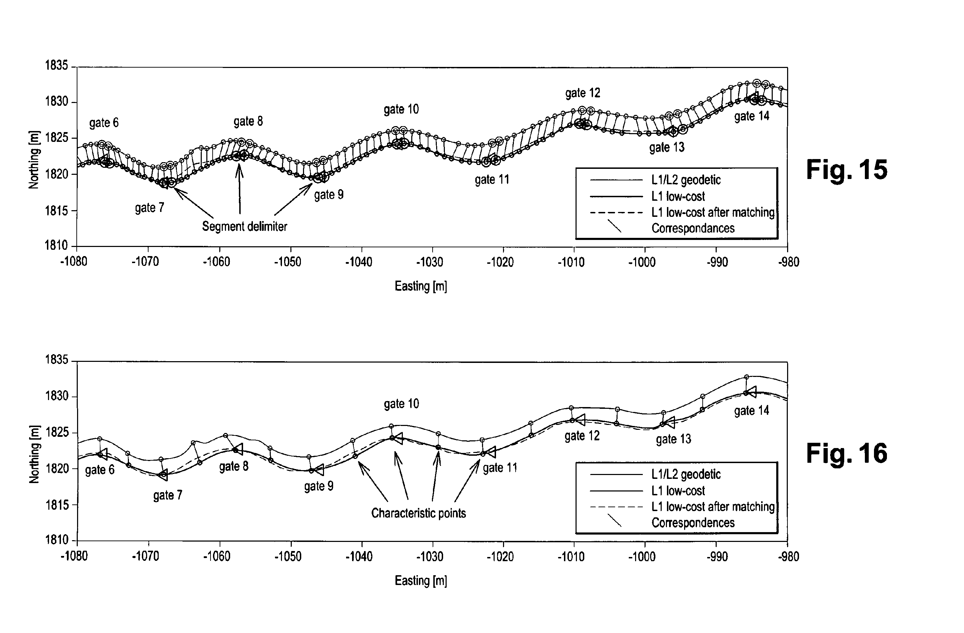

In a second variant, the trajectory is delimited (e.g. by timing gates, figure. 15) and independent Helmert parameters are estimated for each trajectory segment. The size of the **H** and **Z** matrices is reduced accordingly.

In a third variant, only characteristic points of the trajectory (points of maximum curvature, inflection points, figure 16) are retained for the matching. The curvature parameter may be derived from GPS and GPS/INS trajectory. Again, the computation complexity is reduced thanks to the reduced number of points. This approach can also be applied to trajectory segments.

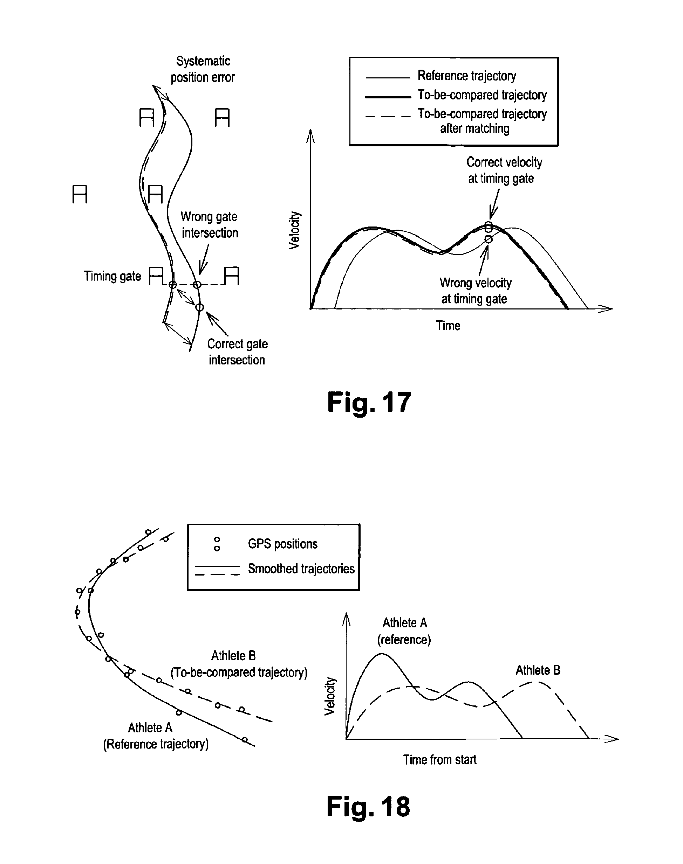

Figure 17 illustrates the efficiency of the matching approach in the case of downhill skiing with gate to cross.

Once the trajectory matching is ended, or if no reference trajectory is available (branch "no" of the test step 48), a spline cubic interpolation is implemented in step 48 to obtain the continuous curve from the data set (matched data set or unmatched data set).

As a matter of fact, the trajectory construction is an efficient way to correct errors in GPS positioning.

2.2. TRAJECTORY ANALYSIS AND COMPARAISON

The analysis of the athletic performance trajectories is often based on datasets that were recorded at different times. This situation occurs, for example, in downhill skiing competitions or training in which skiers make sequential (not simultaneous) runs. Such trajectories cannot be compared by considering only the differences in coordinates or velocities recorded at the same instant in time (as could be done for real-time comparison between two competitors). The trajectory comparison is illustrated in a skiing application. Obviously, it must be understood that skiing is chosen as illustrative application and that other application are possible, such as car racing.

Figure 18 (left) depicts the position of two athletes sampled at the same time interval. Obviously, athlete A is faster than B (the sampling points of athlete B are closer to each other). Their velocity profiles with respect to the time from the start are given in figure 18 (right). An accurate explanation could not be given for the substandard performance of athlete B based on the simple time- or distance-based comparison. Indeed, the temporal profiles can be considered as trajectories with a common frame but which are affected by a drift. Thus, it is not very useful to compare them directly. A better approach is to compare the tracks spatially in increments smaller than the gate crossings.

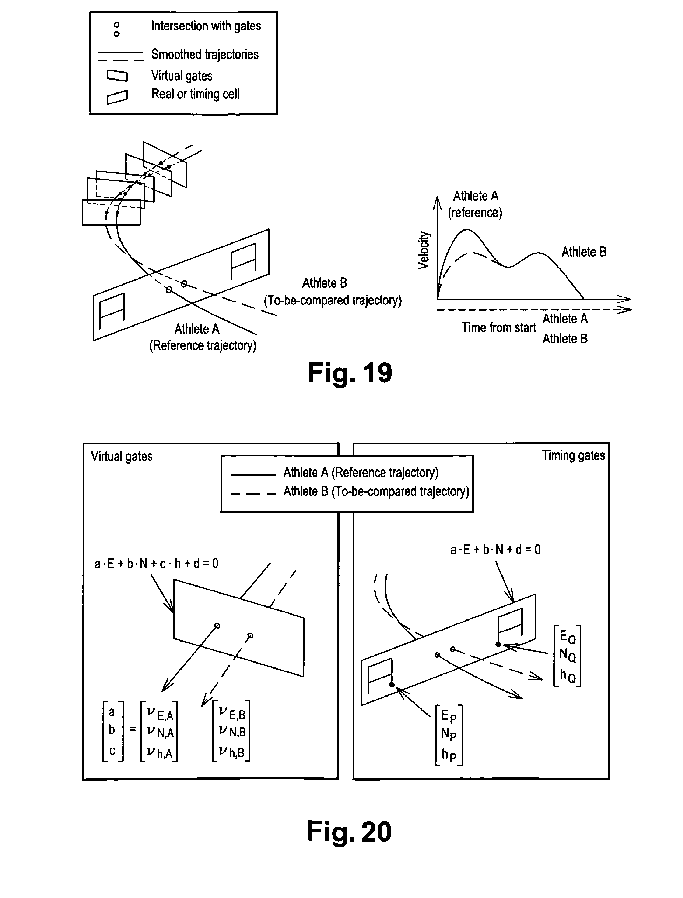

According the invention, after the construction of the continuous trajectories to be compared, as previously described, a reference trajectory is chosen amongst the trajectories. The comparison is then achieved by intersecting equitemporal planes that are perpendicular to the reference track with all the to-be-compared trajectories. Figure 19 (left) shows a simplified schematic of a reference trajectory and a single trajectory that will be compared to it. Based on the intersection time of both trajectories with the plane, the differences between the athletes are computed. Also any other attributes attached to the trajectories can be compared in a straightforward manner (e.g. elapsed time, velocities, accelerations, heart rates ...). Additional splits and (virtual) gates can be easily computed and interposed between the timing cells or gates. Thanks to this approach, the performance can be evaluated at any preselected time or distance interval.

Expressing the vertical plane to the reference trajectory A:

$$a \cdot E + b \cdot N + c \cdot h + d = 0 \tag{78}$$

where *a, b* and *c* are the parameters of the plane (figure 19, right), the normal vector to the plane is given by:

$$\begin{bmatrix} a \\ b \\ c \end{bmatrix} = \begin{bmatrix} v_E \\ v_N \\ v_h \end{bmatrix} \tag{79}$$

Taking the difference between the tow following expressions, d is eliminated and the intersection point of the trajectory B to be compared with the plane [$E_B N_B h_B$] is computed iteratively:

$$\left. \begin{array}{l} a \cdot E_A + b \cdot N_A + c \cdot h_A + d = 0 \\ a \cdot E_B + b \cdot N_B + c \cdot h_B + d = 0 \end{array} \right\} \rightarrow a \cdot (E_A - E_B) + b \cdot (N_A - N_B) + c \cdot (h_A - h_B) = 0 \tag{80}$$

If the intersection with the real gate is sought (figure 20, left), the following equation system is solved supposing a vertical plane (c=0):

$$\left. \begin{array}{l} a \cdot E_R + b \cdot N_R + d = 0 \\ a \cdot E_L + b \cdot N_L + d = 0 \\ a \cdot E_P + b \cdot N_P + d = 0 \end{array} \right\} \rightarrow -(E_L - E_R) \cdot N_P + (N_L - N_R) \cdot E_P + N_R \cdot E_L - N_L \cdot E_R = 0 \tag{81}$$

Once the intersection time is computed, any parameter related to this period (e.g. velocity, heart-rate) can be compared. The orientation comparison is less straightforward because the orientation angles do not belong to a vector space. However, according the invention, the orientation differences between two trajectories are determined based on the following relation:

$$\mathbf{R}_{b1}^n = (\mathbf{I} - \Delta\mathbf{R}_b^n) \cdot \mathbf{R}_{b2}^n \tag{82}$$

where $\mathbf{R}_{b1}^n$ is the reference orientation, $\mathbf{R}_{b2}^n$ is the to be compared orientation, and $\Delta\mathbf{R}_b^n$ is the skew-symmetric matrix with the orientation difference.

The given example on spatial comparison clearly illustrates the superior performance of athlete A in the first section of the track (figure 19, right). In the second section, the performance is identical for both contenders, as indicated by the overlapping trajectory lines. Alternatively, the abscissa could indicate the distance from the start and highlight different sections on the track (sectors, intermediates, gates, etc.).

**Claims**

1. Method for determining a continuous trajectory of a moving object from a position data set, comprising the acquisition of sampled single-frequency differential GPS signal, **characterized in that** it comprises:

   ■ the correction of the high frequency noise in the data set;
   ■ the correction of the systematic error in the data set; and
   ■ the interpolation of the corrected data set with a continuity in position, velocity and acceleration.

2.  Method according claim 1, wherein the correction of the high frequency noise comprises the acquisition of integration of inertial data set and the integration of the inertial data set with the GPS data set.

3.  Method according claim 2, wherein the acquisition of inertial data set is done by a least one MEMs inertial navigation unit.

4.  Method according claim 2 or claim 3, wherein the integration of inertial data set with GPS data set comprises a Kalman filtering, and more particularly an extended Kalman filtering or an unscented Kalman filtering.

5.  Method according claim 4, wherein the update stage of the Kalman filtering is done according a loosely couple approach or a closely coupled approach.

6.  Method according claims 4 or 5, wherein the acquisition of inertial data comprises the acquisition the magnetic field.

7.  Method according claims 4 and 6, wherein the initialization stage of the Kalman filtering is carried out in function of magnetic field measurement.

8.  Method according claim 4 and 6, wherein the update stage of Kalman filtering is carried out in function of magnetic field measurement.

9.  Method according claim 3, wherein the acquisition of inertial data is done by a plurality of MEMs inertial navigation unit, the redundant inertial navigation being processed according to a synthetic mechanization or according to an extended mechanization.

10. Method according claim 1, wherein the correction of the high frequency noise comprises the Kalman filtering of the GPS position data set based on a predetermined model of the position variation.

11. Method according claim 10, wherein the predetermined model is a constant velocity model.

12. Method according any one of the preceding claims, wherein the correction of the systematic errors comprises the matching of the data set to a reference data set.

13. Method according claim 12, wherein the matching is carried out based on Shapiro's algorithm and Helmert transformation.

14. Method according any one of the preceding claims, wherein it further comprises the comparison of two continuous trajectories by determining equitemporal planes that are perpendicular to both trajectories.

Fig. 1

Fig. 2

Fig. 3

EP 2 264 485 A1

Prediction

1) Predict state

$$\hat{x}_k^- = f(\hat{x}_{k-1}^+, u_{k-1})$$

2) Prediction the error covariance

$$P_k^- = \Phi_{k-1} P_{k-1}^+ \Phi_{k-1}^T + \Gamma_{k-1} Q_{k-1} \Gamma_{k-1}^T$$

Update

1) Compute Kalman filter gain

$$K_k = P_k^- H_k^T [H_k P_k^- H_k^T + R_k]^{-1}$$

2) Update the state vector with measurement $z_k$

$$\hat{x}_k^+ = \hat{x}_k^+ + K_k[z_k - h(\hat{x}_k^-)]$$

3) Update the error covariance

$$P_k^+ = [I - K\ H_k] P_k^- [I - K_k H_k]^T + K_k R_k K_k^T$$

Initial estimations

1) State $\hat{x}_0$

2) Error covariance $P_0$

Linear approximation equations

System process model $\Phi_{k-1} \approx \dfrac{\partial f(x,u)}{\partial x}\Big|_{x-k_{k-1}^-}$     Measurement model $H \approx \dfrac{\partial h(x)}{\partial x}\Big|_{x-k_k^-}$

## Fig. 4

## Fig. 5

36

**Fig. 6**

**Fig. 7**

**Fig. 8**

GPS or GPS/MEMS-IMU trajectory — 30

32

Dual-frequency GPS ? — 36

Yes

No

MEMS-IMU ? — 40

No

Yes

Cubic spline smoothing — 38

Additional KF — 42

Reference trajectory ? — 44

No

Yes

Matching to reference trajectory — 46

Cubic spline interpolation — 48

Trajectory comparison — 34

# Fig. 9

# Fig. 10

W

$W_{fixed}$

$W_{float}$

$W_{trans}$

Fixed

Float

Fixed

epochs

$n_{trans}$

$n_{trans}$

**Fig. 11**

**Fig. 12**

EP 2 264 485 A1

Fig. 13

Fig. 14

40

Fig. 15

Fig. 16

**Fig. 17**

**Fig. 18**

**Fig. 19**

**Fig. 20**

EP 2 264 485 A1

**EUROPEAN SEARCH REPORT**

Application Number

EP 09 30 5511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | WÄGLI ET AL: "Trajectory Determination and Analysis in Sports by Satellite and Inertial Navigation" THÈSE N 4288 POUR L'OBTENTION DU GRADE DE DOCTEUR ÈS SCIENCES, [Online] 23 January 2009 (2009-01-23), XP002564487 ÉCOLE POLYTECHNIQUE FÉDÉRALE DE LAUSANNE Retrieved from the Internet: URL:http://biblion.epfl.ch/EPFL/theses/2009/4288/EPFL_TH4288.pdf> [retrieved on 2010-01-21] * the whole document * ----- | 1-14 | INV. G01S19/47 G01C21/16 G01S19/49 |
| | | | TECHNICAL FIELDS SEARCHED (IPC) |
| | | | G01S G01C |

The present search report has been drawn up for all claims

| Place of search | Date of completion of the search | Examiner |
|---|---|---|
| Munich | 21 January 2010 | Ó Donnabháin, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M.D. Schuster ; S.D. Oh.** Three-Axis Attitude Determination from Vector Observations. *Journal of Guidance and Control,* 1981, vol. 4 (1), 70-77
- **I.Y. Bar-Itzhack.** REQUEST - A New Recursive Algorithm for Attitude Determination. *Proceedings of the ION NTM,* 1996
- **A. Osman ; B. Wright ; S. Nassar ; A. Noureldin ; N. El-Sheimy.** Multi-Sensor Inertial Navigation Systems Employing Skewed Redundant Inertial Sensors. *Proceedings of the ION GNSS 2006,* 2006
- **M.A. Sturza.** Navigation System Integrity Monitoring Using Redundant Measurements. *Journal of the Institute of Navigation,* 1988, vol. 35 (4), 69-87
- **A.J. Pejsa.** Optimum Skewed Redundant Inertial Navigators. *AIAA Journal,* 1974, vol. 12, 899-902

- **I. Colomina ; M. Gim_enez ; J.J. Rosales ; M. Wis ; A. G_omez ; P. Miguelsanz.** Redundant IMUs for Precise Trajectory Determination. *Proceedings of the XXth ISPRS Congress,* 2004
- **P. Dierckx.** Curve and Surface Fitting with Splines. Oxford University Press Inc, 1993
- A Practical Guide to Splines. **C. De Boor.** Applied mathematical sciences. Springer-Verlag, 2001
- **Ph. Limpach.** Trajectographie de courses de ski avec GPS. *Master's thesis,* 2003
- **L.S. Shapiro ; M. Brady.** *Feature-Based Correspondence: an Eigenvector Approach. Image Vision Computing,* 1992, vol. 10 (5), 283-288
- **S. Epiney.** Modélisation de la trajectoire pour l'analyse de performances sportives. *Project de semestre,* 2007